# EUROPEAN PATENT APPLICATION

(11) **EP 4 654 414 A1**
(43) Date of publication of application: **26.11.2025**
(21) Application number: 25165372.1
(22) Date of filing: 21.03.2025
(51) Int. Cl.: H02J 1/12, H02J 1/10

(54) **PHOTOVOLATIC MODULE INTEGRATED POWER ELECTRONICS**

(30) Priority: 22.03.2024 US 202463568608 P; 19.12.2024 US 202463736010 P
(71) Applicant: Solaredge Technologies Ltd., 4673335 Herzeliya (IL)
(72) Inventor: ZEHAVI, Matan, 4673335 Herzeliya (IL); KHANANASHVILI, Shimon, 4673335 Herzeliya (IL); YOSCOVICH, Ilan, 4673335 Herzeliya (IL); LOEWENSTERN, Yakir, 4673335 Herzeliya (IL); SHAFAT, Bahat, 4673335 Herzeliya (IL); SHKOURY, Roy, 4673335 Herzeliya (IL)
(74) Representative: V.O.

(57) **Abstract**

Aspects of the disclosure relate to incorporation of power electronics with PV modules and PV cell arrays. Further aspects relate to the mounting location of power electronics and the heat sinking of power electronics.

## Description

### CROSS-REFERENCE TO RELATED APPLICATIONS

The present application claims the benefit of and priority to U.S. Provisional Application No. 63/736,010, filed on December 19, 2024, and titled "Photovoltaic Module Integrated Power Electronics"; and U.S. Provisional Application No. 63/568,608, filed on March 22, 2024, and titled "Photovoltaic Module Integrated Power Electronics." The contents of the aforementioned applications are hereby incorporated by reference in their entirety.

### FIELD

Aspects of the present disclosure relate generally to photovoltaic (PV) modules and integrated power electronics. In particular, one or more aspects of the disclosure relate to apparatuses, systems, and methods for coupling electronics to a PV module.

### BACKGROUND

As the world moves away from non-renewable energy sources, the need for efficient and reliable renewable energy sources grows ever more important. One important renewable energy source is photovoltaic (PV) electrical energy. As a cost effective and clean energy option, photovoltaics are crucial to the shift away from non-renewable energy sources.

However, current PV solutions have their limitations. Currently, in existing technologies, if there are module level power electronics, they are all contained within a single junction box on the back of the PV module. These electronics may be hard to access and service due to their mounting location. Additionally, they may not benefit from heat sinking methodologies.

### BRIEF SUMMARY

Aspects of the present disclosure provide technical solutions that overcome one or more of the technical problems described above and/or other technical challenges. Aspects of the present disclosure additionally relate to improved coupling and/or heat sinking for electronics integrated within photovoltaic (PV) modules and/or PV cell arrays. For instance, one or more aspects of the present disclosure relate to in-frame coupling of electronics. Additionally, aspects relate to in-the-laminate coupling of electronics. Further, aspects relate to electronics coupled to junction boxes. Aspects herein further relate to the incorporation of power electronics with PV cell arrays to variously improve PV energy generation.

Aspects of the present disclosure relate to an apparatus which may include a plurality of photovoltaic (PV) substrings, each PV substring comprising one or more PV cells. The apparatus may further include a plurality of first direct current to direct current (DC-DC) converters (e.g., boost converters). Each DC-DC converter of the plurality of DC-DC converters has an input and an output. The input of each of the plurality of first DC-DC converters is coupled to a corresponding PV substring of the plurality of PV strings. The output of each of the plurality of first DC-DC converters is coupled to an input of a second DC-DC converter (e.g., a buck converter). The apparatus further includes a control circuit configured to maximum-power-point-track each PV substring. The control circuit is further configured to control the second DC-DC converter to convert a voltage from substrings to a safety voltage level at output terminals of the second DC-DC converter, increase the voltage at the output of the second DC-DC converter to a threshold voltage, and control the second DC-DC converter to transition to a bypass mode based on the output voltage being at or above the threshold voltage. The controller circuit may control each of the plurality of DC-DC converters to increase the voltage at the corresponding output (e.g., above the threshold voltage).

### BRIEF DESCRIPTION OF THE DRAWINGS

Some features of the present disclosure are presented by way of example, and not by way of limitation, in the accompanying drawings. In the drawings, like numerals (for example, numerals which end in the same two number) may reference like elements and in which:
FIG. 1A depicts an example photovoltaic (PV) module and PV cell array in accordance with one or more aspects of the present disclosure as described herein.
FIG. 1B depicts an example electrical schematic of an example of the PV module and PV cell array of FIG. 1A.
FIG. 2 depicts an example power electronics according to one or more aspects of the present disclosure.
FIG. 3A depicts an example PV module and PV cell array having interleaved sub-substrings and integrated power electronics.
FIG. 3B depicts an example electrical schematic of the example PV cell array and PV module of FIG. 3A.
FIG. 3C depicts an alternative example electrical schematic of the example PV cell array and PV module of FIG. 3A.
FIG. 3D depicts an alternative example electrical schematic of the example PV cell array and PV module of FIG. 3A.
FIG. 3E depicts an example PV module and PV cell array having interleaved sub-substrings and integrated power electronics.
FIG. 3F depicts an example electrical schematic of the example PV cell array of FIG. 3E.
FIG. 3G depicts an example electrical schematic of the example PV cell array of FIG. 3E
FIG. 3H depicts an alternative example interleaved PV module and PV cell array.
FIG. 3I depicts an example electrical schematic of the example PV cell array of FIG. 0H.
FIG. 3J depicts an alternative example electrical schematic of the example PV cell array of FIG. 3H.
FIG. 3K depicts an example interleaved PV module and PV cell array having integrated PEs.
FIG. 3L depicts an example electrical schematic of the example PV cell module and PV cell array of FIG. 3K.
FIG. 3M depicts an example of a configuration of a PV module having substrings and integrated power electronics.
FIG. 3N depicts an example of a configuration of a boost converter which may be used in the example configuration of FIG. 3M.
FIG. 3O depicts an example of a method for operating a PV module and integrated power electronics.
FIG. 3P depicts a method for maintaining a PV module.
FIG. 4 depicts an example interleaved PV module and PV cell array having an odd number of PV cells per substring.
FIG. 5A depicts an example conductive backsheet that may effectuate a PV module and PV cell array having interleaved substrings with an odd number of PV cells in each substring.
FIG. 5B depicts an alternative example conductive backsheet that may effectuate a PV module and PV cell array having interleaved substrings with an odd number of PV cells in each substring.
FIG. 6A depicts an example flowchart of an example method for operating a plurality of PEs (e.g., power converters) coupled to a plurality of PV substrings.
FIG. 6B shows a more detailed flow chart of method step 1804 of FIG. 6A.
FIG. 6C shows a more detailed flow chart of method step 1806 of FIG. 6A.
FIG. 6D shows a more detailed flow chart of method step 1808 of FIG. 6A.
FIG. 6E shows a more detailed flow chart of method step 1810 of FIG. 6A.
FIG. 6F shows a more detailed flow chart of method step 1812 of FIG. 6A.
FIG. 7A-7C show an example single-sided PV module.
FIG. 8 shows an example interleaved butterfly PV module comprising 12 substrings of PV cells with PCB couple to frame.
FIG. 9 shows a cross section of the PV module with the PCB coupled to the frame.
FIG. 10A shows an example interleaved butterfly PV module comprising 12 substrings of PV cells with PCB coupled to laminate.
FIG. 10B shows an example interleaved butterfly PV module comprising 12 substrings of PV cells with PCB coupled to laminate without midpoint voltage and output terminals on different sides of the PV module.
FIG. 10C shows and example of the PV module 2200 of FIG. 10A which may include a main and additional PCBs.
FIG. 10D shows an example of the PCB in FIGS. 10A and 10B.
FIG. 10E and FIG. 10F show example carrier signals used to generate PWM signals.
FIG. 11 shows an example interleaved butterfly PV module comprising 12 substrings of PV cells with rigid PCB and flex PCB.
FIG. 12 shows an example interleaved butterfly PV module comprising 12 substrings of PV cells with rigid PCB sections and flex PCB sections.
FIG. 13A-13D show a cross section of a PV module with the PCB in the laminate.
FIG. 14 shows an interleaved butterfly PV module comprising 12 substrings of PV cells with decentralized junction boxes.
FIG. 15A shows a cross section of a PV module with the PCB in the laminate, coupled to a heat sink.
FIG.15B shows a cross section of a PV module with the PCB in the frame, coupled to a heat sink.
FIG. 15C shows a cross section of a PV module with the PCB in the laminate, coupled to a heat sink.
FIG. 15D shows a cross section of a PV module with the PCB in the laminate, coupled to a heat sink.
FIG. 15E shows a cross section of a PV module with the PCB in a junction box, coupled to a heat sink.
FIG. 16 shows an interleaved butterfly PV module comprising 12 substrings of PV cells with decentralized junction boxes, using cables as a heat sink.
FIG. 17 shows a PV module with two PCBs 1576 with V_{mid} in the middle of the PV module.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced. As described herein, photovoltaic (PV) cell arrays and PV modules may be comprised of substrings of serially connected PV cells. Substrings of serially connected PV cells may operate in accordance with the weakest PV cell in the substring. When one or more PV cells in a substring of otherwise normally irradiated PV cells experiences shading or other reduced irradiance, the shaded PV cells may produce less current than the otherwise normally irradiated PV cells-producing a mismatch condition. In such a case, the entire substring may operate at a reduced level, where the normally irradiated PV cells may become forward biased and the reduced PV cell may become reverse biased and absorb the excess energy produced by the normally irradiated PV cells. Thus, in some instances, the production of an entire PV cell array may be reduced by up to 100% when only a fraction of the PV cell array is shaded or otherwise experiences reduced irradiation or production. Further, the absorption of energy in the reversed biased PV cell (or other PV generator (e.g., substring, PV cell arrays, PV modules, PV module array) may cause "hot-spotting" and may possibly damage the PV cell, PV cell array, and/or PV module.

In at least some existing technologies, module level power electronics (MLPE) may be used to reduce the impact of losses in the PV system. Traditionally, MLPE may be installed at each module and may be comprised of direct current (DC) power optimizers and/or microinverters. MLPE may provide module specific data used for in-depth monitoring. MLPE may also help the module meet rapid shutdown safety standards. The MLPE may be encased in a separate housing and installed on the back of a PV module and wired to a junction box. Aspects of the present disclosure relate to improving mismatch mitigation and improved methods of PV cell array production and manufacturing. To those ends, some aspects of the present disclosure relate to the use of conductive backsheets and rear contact PV cells to produce beneficial PV cell electrical interconnectivity (to, among other things, mitigate the mismatch condition) and varying PV cell and substring spatial topologies. Such configurations may be associated with reduced complexity of manufacturing and production of varied electrically connected and spatially arranged PV cell arrays utilizing conductive backsheets and rear contact PV cells. Further to those ends, some aspects of the present disclosure relate to the inclusion and placement of MLPE to improve efficiency and reliability of PV modules.

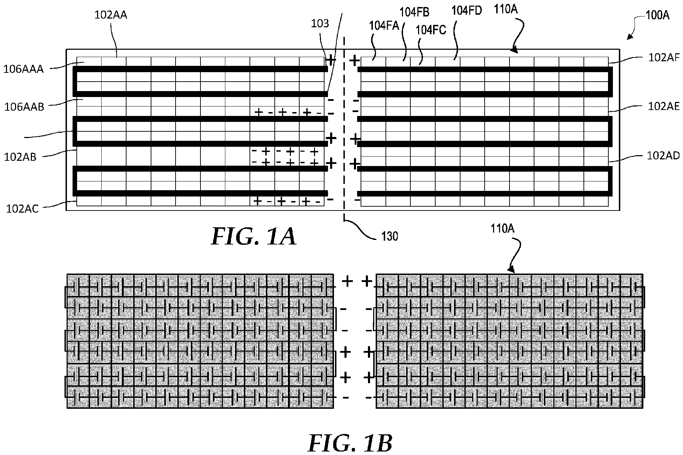

FIG. 1A depicts an example PV module 100 and PV cell array 110 in accordance with one or more examples of the present disclosure. Numerous PV cell arrays (e.g., landscape-oriented PV cell arrays, portrait-oriented PV cell arrays, distributed PV cell arrays, roof tile PV cell arrays, etc.) are depicted herein and are generally referred to as PV cell arrays. Referring to FIG. 1A, PV module 100A may comprise PV cell array 110A. PV cell array 110A may comprise several substrings 102 (e.g., two-row substrings 102AA, 102AB, 102AC, etc. Numerous substrings are described herein (e.g., two-row substrings 102AA, 102AB, 102AC, etc., distributed substrings, etc.) and are generally referred to as substrings. Each substring may include a plurality of PV cells (e.g., PV cells 104A, 104B, 104C, etc.) serially electrically connected. Numerous PV cells are described herein (e.g., 104FA, 104FB, 104FC (e.g., as depicted in FIG. 1A), rear contact PV cells, etc.) and are generally referred to as PV cells. PV cells of the present disclosure may include monocrystalline silicon, polycrystalline silicon, thin film, gallium arsenide, multi-junction, perovskite, organic solar cells, dye-sensitized solar cells, quantum dots, etc. Substrings may be formed of and/or comprise full PV cells (e.g., PV cells 104), ½ cut PV cells, ¼ cut PV cells or any fractionally cut PV cell as described in further detail herein, and are generally referred to as PV cells herein. Further, substrings may include any number of PV cells. PV cells in a substring may have positive and negative terminals and may be electrically connected in series to form the substring. For example, the positive terminal(s) of PV cell 104FA may be connected to the negative terminal(s) of 104FB, the positive terminal(s) of PV cell 104FB may be connected to the negative terminal(s) of PV cell 104FC, etc. Substrings, therefore, may terminate in positive terminals (e.g., positive terminal 103) and negative terminals (e.g., negative terminals 105).

Substrings 102 may be electrically connected to each other in parallel establishing a PV cell array 110 of electrically parallelly connected substrings 102 of electrically serially connected PV cells 104. PV cells 104, substrings 102, PV cell arrays 110, and PV modules 100 are all examples of PV power generators. Substrings 102 may comprise any number of PV cells 104 (e.g., 20 PV cells, 30 PV cells, etc.). Solid black lines shown in FIG. 1A depict a conductive path. The conductive path may be through any number of different conductive media, for example, through PV cells, silver fingers, busbars, conductive backsheets, ribbon wire, etc. FIG. 1B depicts an example electrical schematic of an example of the PV module 100 and PV cell array 110A of FIG. 1A.

The several substrings 102 of the PV module 100 or PV cell array 110 may be arranged on the PV module 100 such that all substring terminals 103, 105 may terminate facing a midline 130 of the PV module 100 and/or PV cell array. As shown in FIGS. 1A and 1B, the PV cell array 110 includes six substrings 102. Alternatively, in some examples, PV cell arrays 110 may be provided with any number of substrings 102. The PV module 100 and/or PV cell array 110 may include a first half and a second half; a first half of the substrings 102 may be disposed on the first half, and a second half of the substrings 102 may be disposed on the second half. For example, for a PV module 100 with six substrings 102 (e.g., two-row substrings 102AA-102AF): three substrings (e.g., 102AA, 102AB, and 102AC) may be disposed on the first half of PV module 100, and three substrings 102 (e.g., 102AD, 102AE, and 102AF) may be disposed on the second half of PV module 100. Each substring may have at least two neighboring substrings. Substrings 102 may have neighboring substrings 102 above (e.g., two-row substring 102AA may be considered the above neighbor of two-row substring 102AB), below (e.g., two-row substring 102AB may be considered the below neighbor of two-row substring 102AA), to the right (e.g., two-row substring 102AF may be considered the right neighbor of two-row substring 102AA), and/or to the left (e.g., two-row substring 102AA may be considered the left neighbor of two-row substring 102AF) in any combination thereof. The substrings 102 may be arranged on the PV module 100 and/or in the PV cell array 110 such that the negative terminal 105 of each substring 102 may terminate proximate to the negative terminal 105 of a first neighboring substring 102, and the positive terminal 103 of each substring 102 may terminate proximate to the positive terminal 103 of a second neighboring substring 102. This proximate arrangement may, in some cases, simplify the parallel connection of different substrings. For example, the negative terminal 105 of two-row substring 102AA may terminate proximate to the negative terminal 105 of first neighboring two-row substring 102AB (below two-row substring 102AA), and the positive terminal 103 of two-row substring 102AA may terminate proximate to the positive terminal 103 of second neighboring two-row substring 102AF (to the right of two-row substring 102AA). The terms first neighbor and second neighbor are arbitrary and are for referential and purposes of example only and are not intended to be limiting. FIGS. 1A and 1B depict the intra-substring connections but do not depict the inter-substring connections.

For purposes of depiction, each substring 102 may be further divided into rows of sub-substrings for example, two-row substring 102AA may be divided into two rows of sub-substrings, sub-substring 106AAA and sub-substring 106AAB. Many examples of two-row substrings 102A are provided herein (e.g., 102AA, 102AB, 102AC, etc.) and may be referred to generally as two-row substrings 102A. Alternatively, substrings 102 may be divided into four (as described in further detail herein), six, eight, etc. sub-substrings 106. Two-row substring 102A may be arranged in two rows of sub-substrings 106, sub-substring 106AAA and sub-substring 106AAB. As described above, half of the total number of substrings 102 of the PV cell array 110 may be disposed on either side of PV module 100 and/or PV cell array 110. As shown in FIGS. 1A and 1B, two-row substrings 102A may be arranged on the PV module 100 in rows of sub-substrings 106 equal to the number of two-row substrings 102A per half of PV module 100 times two. For example, three two-row substrings 102A (e.g., two-row substrings 102AA-102AC) may be disposed on a first half of PV module 100, the three two-row substrings 102A (e.g., two-row substrings 102AA-102AC) may be further divided into six sub-substrings 106.

As shown in FIGS. 1A and 1B, each sub-substring 106 may extend from a substring positive terminal 103 to a substring midpoint 107 (e.g., a substring electrical potential midpoint), or from a substring negative terminal 105 to the substring midpoint 107. Substring midpoints 107 on PV module 100 may be equipotential or have substantially the same electrical potential under similar operating conditions. In some cases, as described herein, substring midpoints 107 (and, in some configurations, quarter points and/or three quarter points) may be electrically connected to one another, to create parallel connection of sub-substrings.

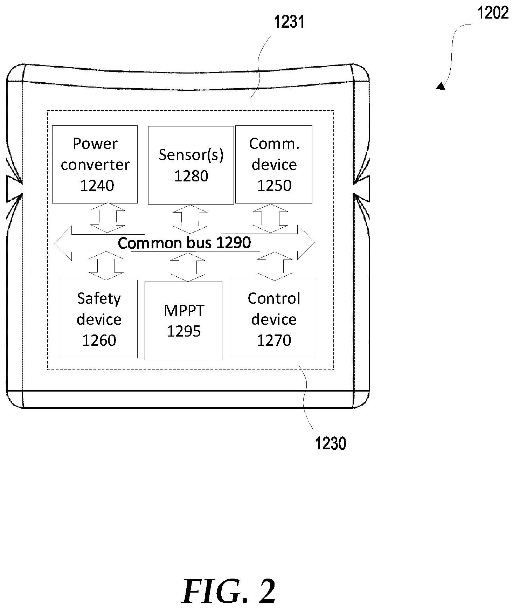

According to the disclosure herein substrings and PV modules may be variously actively optimized, utilized, converted, and/or inverted using power electronics (PEs). Such PEs may act at the substring 102 level, the multi-substring level (e.g., PE acting on 2, 3, 4, etc. substrings 102), the PV module level, and/or the multi-PV module level (e.g., PE acting on 2, 3, 4, etc. PV modules). Reference is now made to FIG. 2, which depicts an example PE, generally referenced 1202, according to one or more aspects. PE 1202 may include a casing 1231. The casing 1231 may house circuitry 1230 (depicted functionally). Additionally or alternatively, the PE 1202 may be disposed directly on a conductive backsheet 301 (e.g., conductive backsheet 301A-901H) or PV module substrate. PE 1202 may be epoxy coated or otherwise encapsulated (e.g., utilizing a resin) on the conductive backsheet Additionally or alternatively, PE 1202 may be housed in a junction box (e.g., junction box 242A, 342, etc.). Additionally or alternatively, casing 1231 and junction box (e.g., junction box 242A, 342, etc.) may be one and the same. PE 1202 may include power converter 1240. Power converter 1240 may include a direct current-direct current (DC-DC) converter such as a buck, boost, buck+boost, flyback, Cuk, buck and boost in any order, and/or forward converter. Power converter 1240 may include a direct current - alternating current (DC/AC) converter (e.g., an inverter, or a micro-inverter designed to convert a smaller portion of power from DC to AC) instead of, or in addition to, a DC-DC converter. Positive and negative terminals of the PV generator (e.g., terminals 105 and 103 of substrings 102) may be electrically connected to input terminals of power converter 1240, and power converter 1240 may be configured to converter DC electrical power generated by the PV generator to a different form of electrical power, for example, to DC power at a different voltage or current level, or to AC power.

According to Illustrative aspects of the present disclosure, circuitry 1230 may include Maximum Power Point Tracking (MPPT) circuit 1295, configured to extract increased power from the PV generator (e.g., PV cells, substrings, PV cell arrays, PV modules, PV module arrays etc.) to which PE 1202 is coupled. MPPT circuit 1295 may track the characteristics of the power being produced by a PV generator, for example, the I-V curve (current-voltage curve), and adjust the load (impedance) presented to the PV generator to keep the power transfer at its substantially maximum power point (MPP). Power converter 1240 may include MPPT 1295, rendering a separate MPPT circuit 1295 unnecessary. Circuitry 1230 may further comprise control device 1270 such as a microprocessor, a microcontroller, a Digital Signal Processor (DSP) and/or a Field Programmable Gate Array (FPGA). The control device 1270 may comprise control circuitry. Control device 1270 may control and/or communicate with other elements of circuitry 1230 over common bus 1290 and provide control signals to the other elements of circuitry 1230 (e.g., to power converter 1240, to safety device 1260, to communications device 1250 etc.). In some aspects, control device 1270 may control power converter 1240 to perform the functions of MPPT circuit 1295, by receiving voltage and/or current measurements at the input and/or output of the power converter 1240, and based on those measurements, control the power converter 1240 to adjust its input voltage or current, or adjust its output voltage or current such that power generated by the PV generator is increased. Control device 1270 may use pulse width modulation (PWM) to adjust the input voltage and/or current. Circuitry 1230 may include circuitry and/or sensors/sensor interfaces 1280 configured to measure parameters directly or receive measured parameters from connected sensors on or near the PV generator, such as the voltage and/or current output by the module, the power output by the module, the irradiance received by the module and/or the temperature on or near the module. Circuitry 1230 may include communication device 1250, configured to transmit and/or receive data and/or commands to/from other devices. Communication device 1250 may communicate using one or more of, for example, Power Line Communication (PLC) technology, acoustic communications technologies, or wireless technologies such as BlueTooth^{™}, ZigBee^{™}, Wi-Fi^{™}, cellular communication or other wireless methods.

Circuitry 1230 may include safety devices 1260 (e.g. fuses, circuit breakers and Residual Current Detectors, etc.). For example, fuses may be connected in series with some or all of conductors (e.g., in series with a power path from the terminals of the PV generator to the output of the junction box). As another example, PE 1202 may include a circuit breaker, with control device 1270 configured to activate the circuit breaker and disconnect PE 1202 from a PV string or a PV generator in response to detecting a potentially unsafe condition or upon receiving a command (e.g. via communication device 1250) from a system control device. As yet another example, PE 1202 may include a bypass circuit featuring a switch, with control device 1270 configured to activate the bypass circuit in response to detecting a potentially unsafe condition or upon receiving a command (e.g. via communication device 1250) from a system control device 1270. The bypass circuit, when activated, may short-circuit the input and/or output terminals of PE 1202 (e.g., connected to the positive and negative terminals of the PV generator). Additionally or alternatively, the bypass circuit may disconnect the input terminals from the output terminals of PE 1202.

According to aspects of the present disclosure, PEs 1202 may also be utilized to mitigate adverse effects of mismatch or the partial shade conditions, such as "hot-spotting" as described herein. PEs 1202 may monitor the performance and power characteristics of a PV generator (e.g., PV cell, substring, PV cell array, PV module, PV module array). The PEs 1202 may detect, based on the PV generator performance (e.g., I-V curve) and power characteristics, that a portion of the overall PV generator (e.g., a single PV cell in a PV module or a single PV cell in a substring) is being reversed biased and/or "hot-spotting" due to reduced irradiance from, for example, the partial shading condition. The PEs 1202 may then operate to mitigate the reverse bias or "hot-spotting." PEs 1202 may counteract such PV generator reverse bias in a number of ways. For example, the PEs 1202 may alter the amount of current being drawn from the overall PV generator (e.g., PV module, substring, (e.g., substrings 102, 402, etc.)) to match the current being produced by the reduced PV generator (e.g., the shaded PV cell). In that way, the reduced PV generator may no longer be reverse biased (or may be less reverse biased) and the negative effects such as "hot-spotting" may be mitigated. Additionally or alternatively, PEs 1202 may bypass the reduced PV generator (e.g., substring). According to aspects, PEs 1202 may be able to act on a more granular level. For example, PEs 1202 may be connected with, or have control of a PV cell array on a substring level (as discussed in further detail below). In such examples, PEs 1202 acting on substring levels may or may not be connected with additional PEs 1202 acting on a less granular level, for example on a PV module level. In such examples, multiple PEs 1202 may be acting on the same system at different levels of granularity. Further in such examples, PEs 1202 may be able to detect on a substring level, based on power characteristics and performance, whether a portion of the substring is experiencing the mismatch condition and/or "hot-spotting" due to for example, reduced irradiance or partial shading. The PEs may then either move the portion to a safe operating point (for e.g., by reducing the current draw to match the reduced portion), or alternatively bypass the reduced portion. In another aspect, PEs may utilize thermocouples to detect when a PV generator is "hot-spotting" and act on the PV generator accordingly, as described herein.

PEs may be utilized on a panel level, where the power production of an entire PV module may be acted upon. After being acted upon, the power from a PV module may be joined with that of other PV modules electrically connected in any of various methods including for example in series, in parallel, in series-parallel, TCT, etc. If the direct current (DC) power has not yet been inverted at a more granular level (e.g., the substring level), the power may then be inverted to AC and utilized. Alternatively, the power may not be inverted and it may be utilized.

It may be advantageous to connect PEs 1202 on a more or less granular level. For example, it may be advantageous to connect PEs 1202 on a substring 102 level, a multi-substring level (e.g., 1, 2, 3, etc. substring acted on by a single PE), a PV module level, and/or a multi-PV module level (e.g., 1, 2, 3, etc. PV modules acted on by a single PE 1202). For example, in a commercial PV power station (e.g., solar park, solar farm, etc.) in an open area, partial shading may be less of a concern and cost savings may be more of a concern. In such examples PEs may be utilized on a less granular level, for example, one PE 1202 for every 3, 4, 5, etc. PV modules. In such examples, the PEs may operate substantially as described above (e.g., monitoring, optimizing, mitigating mismatch, mitigating "hot-spotting," inverting, communicating etc.) but on a less granular level. Additionally or alternatively, "central" PEs 1202 (e.g., one PE 1202 for every 3, 4, 5, etc. PV modules) may be able to optimize, control, communicate on a more granular level. For example, a "central" PE 1202 (e.g., connected to four PV modules), may still be able optimize each of the four modules separately. Such a scheme may be effectuated by, for example, smart switching by the PE 1202 between the PV modules. Additionally or alternatively, it may be advantageous to mix levels of granularity. For example, it may be advantageous to have some control with a PE 1202 at the substring 102 level and have additional control with an additional PE 1202 at the PV module level.

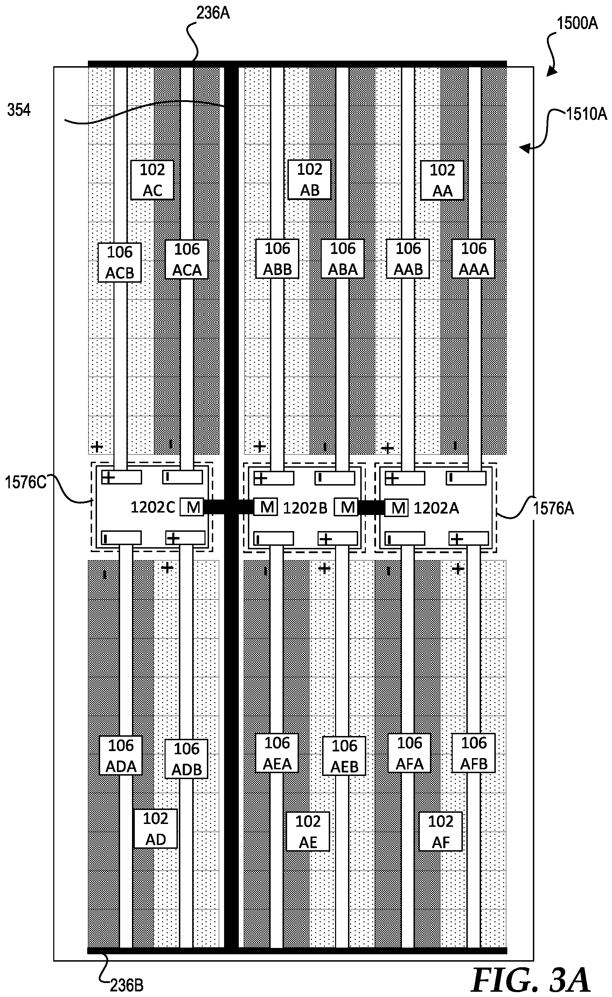

As described in the disclosure herein, PEs 1202 may be integrated with a PV module, where PEs 1202 may comprise, for example, power converters which may be configured to operate the substrings in the PV module according to a maximum power tracking (MPPT). FIG. 3A depicts an example PV module 1500A and PV cell array 1510A having interleaved sub-substrings 106AAA-106AFB (generally, sub-substrings 106A) and integrated power electronics (PE) 1202. PV modules and or PV cell arrays having interleaved sub-substrings 106A may also be referred to as having interleaved substrings and or an interleaved PV module and/or PV cell array. As described herein, for clarity of discussion, PV cell array 1510A may be described in terms of rows and columns. For example, PV cell array 1510A may be understood to comprise 6 columns and 2 rows of sub-substrings 106A.

As described herein, parallel connections of substrings, and/or cross-ties (e.g., midpoint cross-ties), may improve partial shade (and other shade) condition robustness. Additionally, PEs 1202 may improve partial shade (and other shade) condition robustness, for example, by moving the operating point of one or more portions (e.g., substrings) of the PV module. Accordingly, PE 1202 may be connected to PV generators (e.g., to optimize and/or convert generated power). Additionally, PEs 1202 may be integrated with interleaved PV cell arrays, and at various levels of granularity. For example, an entire PV cell array may be connected to a single PE 1202. Alternatively, PEs 1202 may be integrated with PV cell arrays on a more granular level. Referring to FIG. 3A, each of PEs 1202A-1202C (generally, PE 1202) may be connected to two of substrings 102AA-102AF (generally, substring 102A). Interleaved sub-substring 106A (and substrings 102A) may terminate proximate to the PV module 1500A and PV cell array 1510A midline. PEs 1202 may be disposed proximate to the substring 102A terminals, and proximate to the PV cell array 1510A midline. For increased safety, PV Module 1500A may comprise a creepage and clearance between a frame of PV module 1500A and PV cell array 1510A, between substrings 106, and/or between PV cells 104 (e.g., reducing the probability of a short circuit or an arc due to a high voltage difference). The creepage and clearance may be determined based on the rated voltage of PV module 1500.

PEs 1202 may be incorporated into one or more PCBs 1576A-1576C (generally, PCB 1576) (three PCBs 1576 are depicted in FIG. 3A but, for clarity, only two include reference numerals). Additionally or alternatively, PCBs 1576 may comprise one or more PEs 1202. PCBs 1576 may be single layer PCBs or multilayer PCBs. According to some example configurations, single layer PCBs may be more cost effective. According to other example configurations, multilayer PCBs may facilitate PV cell array 1510A intraconnection, as discussed herein.

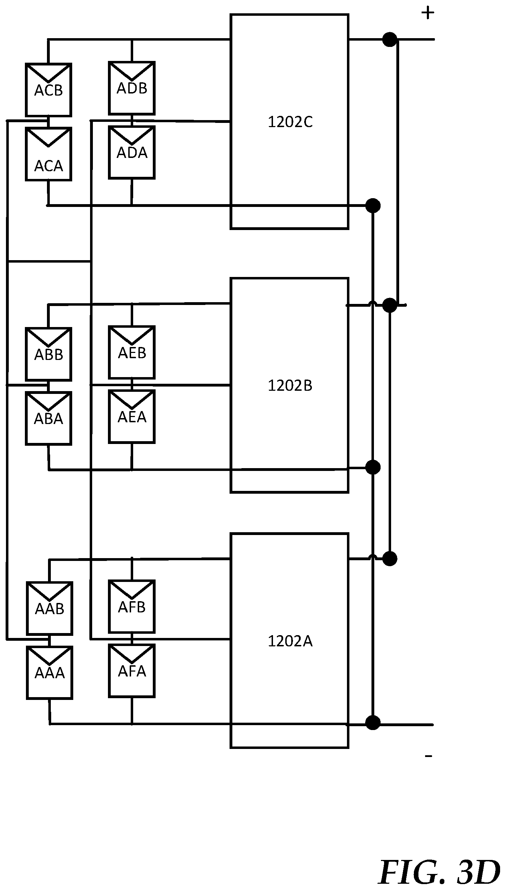

For example, similarly to that which is described with respect to FIG. 3D, multilayer PCB 1576 may comprise one or more layers of conductive regions and one or more layers of dielectric material (e.g., fiberglass, pregpreg, etc.) insulating and/or separating the one or more conductive regions. Incorporating such multilayer PCBs 1576 into the PV cell array 1510A and PV module 1500A may benefit substring 102A interconnection. For example, as described herein, substrings 102A may be electrically connected to each other in parallel. In order to effectuate such parallel interconnection, one or more conductors may crossover and/or intersect each other. As described, such conductor crossover may be associated with increased cost and or labor (e.g., considering the addition of insulation between conductor ribbon crossover). Accordingly, multilayer PCBs 1576 may be used to address such conductor crossover concerns. For example, instead of crossing and/or intersecting conductor ribbon, multi-layer PCBs 1576 may be configured to "cross" and/or intersect conductor paths on different layers.

For example, substring 102AA may be parallelly connected to substring 102AF. Accordingly, the positive terminal of substring 102AA may be connected to the positive terminal of substring 102AF. Similarly, the negative terminal of substring 102AA may be connected to the negative terminal of substrings 102AF. As depicted in FIG. 3A, the positive terminal of substring 102AA may be disposed across from the negative terminal of substring 102AF. Accordingly, depending on the configuration, the negative-negative connection of substrings 102AA and 102AF, and the positive-positive connection of substring 102AA and 102AF may crossover each other.

Utilizing multilayer PCB 1576A, such crossover concerns may be addressed. For example, as depicted, the terminals of substrings 102AA and 102AF may be connected to terminals of the PE 1202A on PCB 1576A. The positive terminals of substrings 102AA and 102AF may be connected to each other, for example, on a first conductive layer of PCB 1576A. The negative connections of substrings 102AA and 102AF may be routed (e.g., using electrical vias) to another (e.g., a second) conductive layer of the PCB 1576A (e.g., through one or more dielectric layers). The negative connections of substring 102AA and 102AF may be connected to each other on the another conductive layer of the PCB 1576A. In this manner, the physical paths of the positive-positive connection and the negative-negative connection of substrings 102AA and 102AF may cross paths on different layers of the PCB 1576A. Accordingly, conductor crossover may be more simply achieved on the PV module 1500A and substring 102A interconnection may be facilitated.

The substring terminals may be connected to the PEs 1202. For example, a conductor may be electrically connected to the negative terminal of substring 102AA and a terminal of the PE 1202A. Additionally, a second conductor may be electrically connected to the positive terminal of substring 102AA and a positive terminal of the PE 1202A. Further, a third conductor may be connected to the negative terminal of substring 102AF and a negative terminal of PE 1202A. Further still, a fourth conductor may be connected to the positive terminal of substring 102AF and a positive terminal of PE 1202A. Similar connections may be achieved between the remaining substrings 102A (e.g., substrings 102AB, 102AC, 102AD, and 102AE), and the remaining PEs 1202 (e.g., PE 1202B and 1202C).

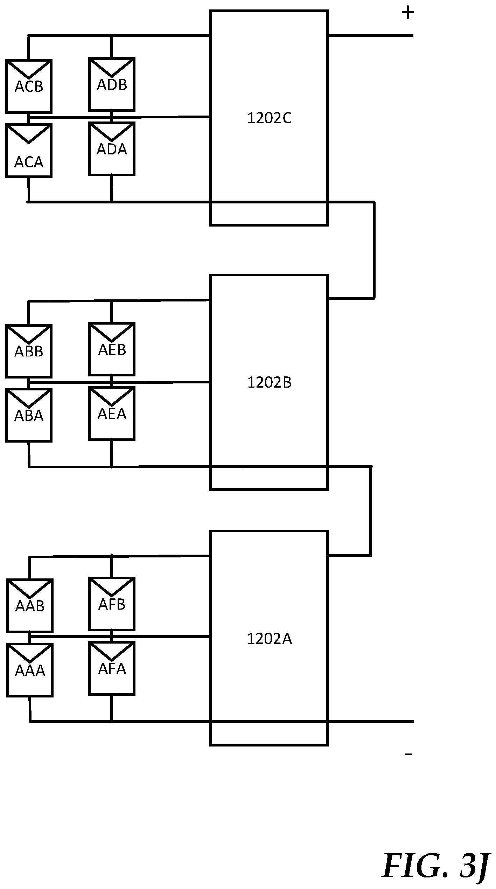

As described elsewhere herein (e.g., with reference to FIG. 3J) the electrical midpoints (e.g., electrical midpoint terminals) of the substrings 102A of PV cell array 1510A may be cross-tied (e.g., electrically connected), for example, via substring midpoint cross-ties 236A and 236B (e.g., one or more conductors) and midpoint cross-tie connector 354 (e.g., one or more conductors). Accordingly, the electrical midpoints (that are, e.g., substantially equipotential), may be availed and connected to the PEs 1202 for additional substring 102A control and/or power conditioning. In alternative configurations, the substring 102A electrical midpoints may be connected to each other but may not be connected to the PEs 1202. Additionally, although the midpoint cross-tie connector 354 is depicted as routing between substrings 102AC and 102AB and between substrings 102AD and 102AE, it should be understood that the midpoint cross-tie connector 354 may be routed at many other additional or alternative locations in the PV cell array 1510A and on the PV module 1500A (e.g., at either edge of the PV cell array 1510A, between other substrings 102A, behind substrings 102A, etc.).

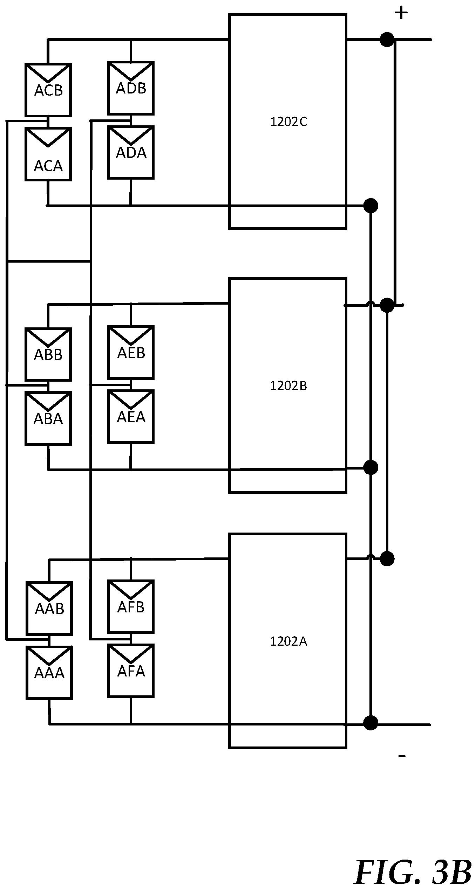

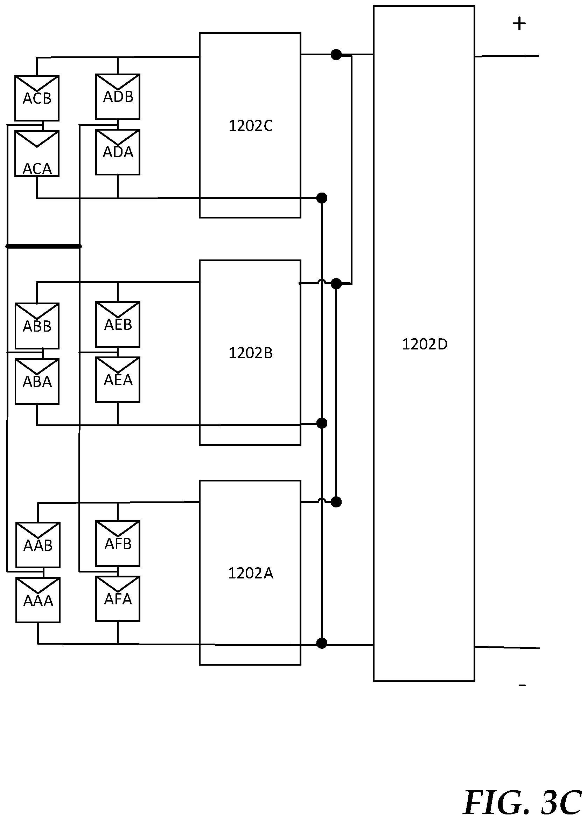

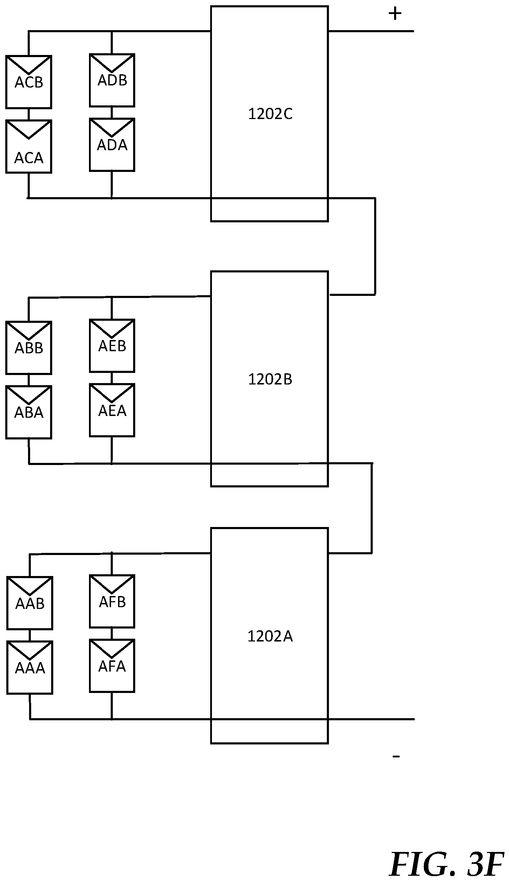

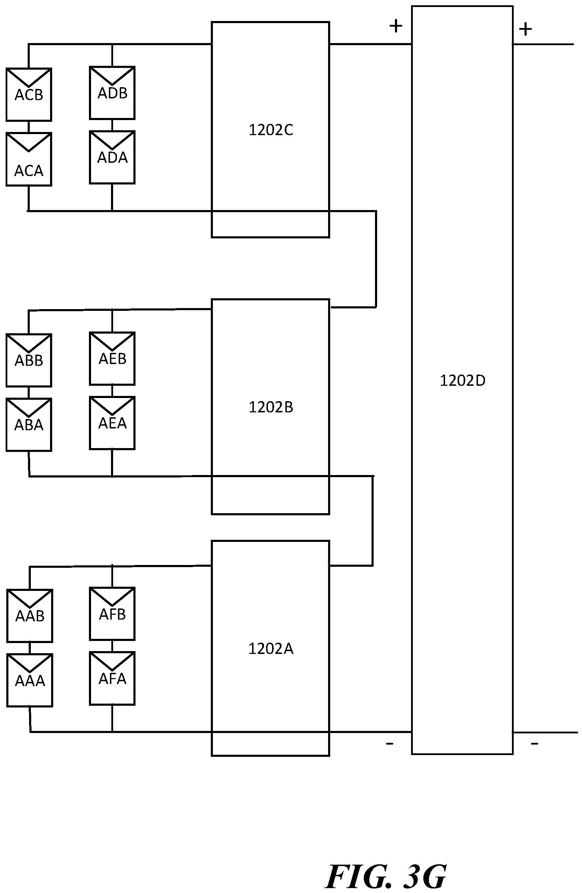

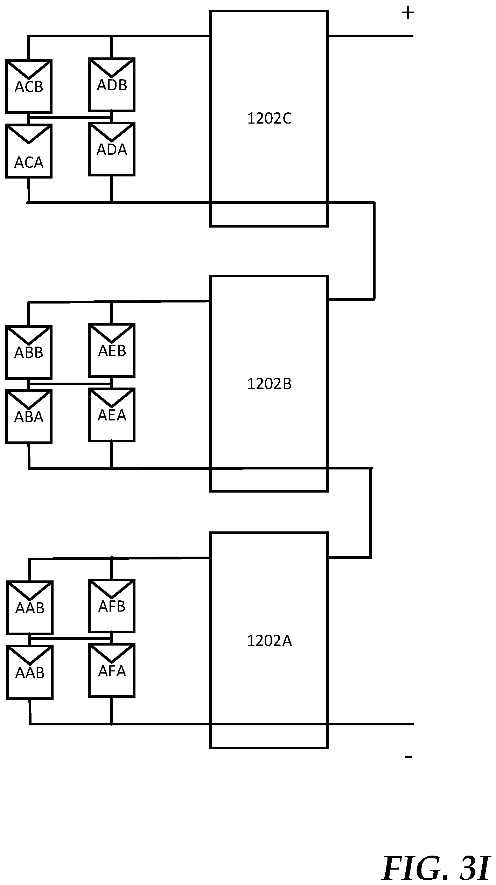

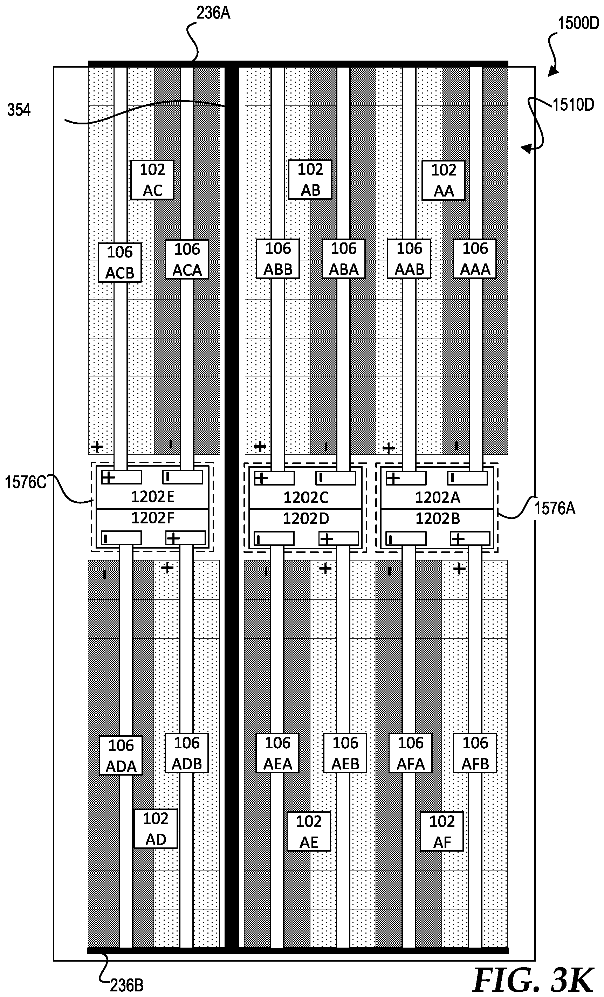

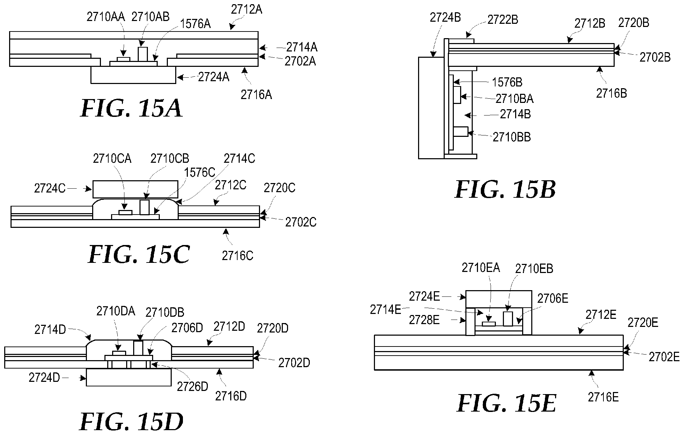

In addition to the parallel connection of the substrings 102A, the PEs 1202 may be variously electrically interconnected, depending on design considerations. For example, FIG. 15B depicts an example electrical schematic of the example PV cell array 1510A and PV module 1500A of FIG. 3A. Referring to FIG. 3B, in addition to the parallel interconnection of all of the substrings 102A, the PEs 1202A-1202C (generally, PEs 1202) may also be connected to each other in parallel. Sub-substrings 106AAA-106AFB are depicted in FIG. 3B but, for clarity, are referenced using the last three letters of the sub-substring reference only (e.g., "106" is omitted). For example, sub-substring 106AAA of FIGS. 3A and 3B is referenced as AAA in FIG. 3B (a similar reference scheme is maintained for FIGS. 3C, 3F, 3G, 3I, 3J, and 3K). In the example configuration of FIG. 3B, the substrings midpoints 102A are connected to each other, however, the substring 102A midpoints are not connected to the PEs 1202.

In addition to design considerations, as described in more detail herein, the parallel connection of the PEs 1202 may have one or more advantages. For example, if connected in parallel, the PEs 1202 may share a common ground. Additionally, if connected in parallel, the PE 1202 Vin and Vout may comprise the same terminal. Accordingly, connection of the PEs 1202 in parallel may be simplified.

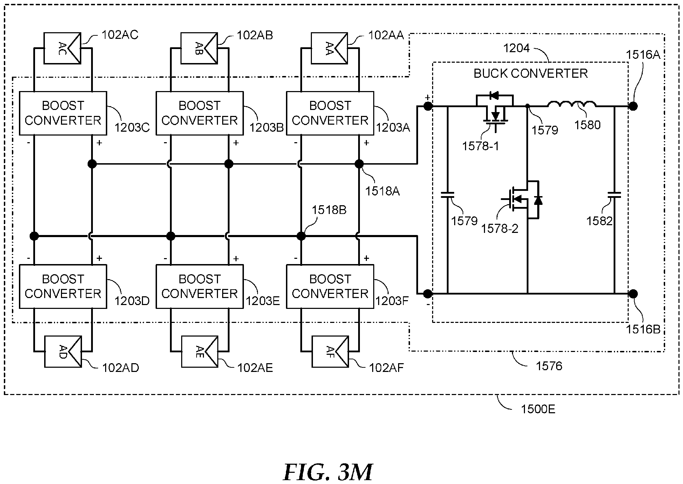

FIG. 3C depicts an alternative example electrical schematic of the example PV cell array 1510A and PV module 1500A of FIG. 3A. Referring to FIG. 3C, in an example configuration, all of the PEs 1202A-1202C may be connected to a single output PE 1202D. The single output PE 1202D may be integrated with the PV module 1500 or may be connected to outputs of the PV module 1500A (e.g., to output leads of PV module 1500A). The output PE 1202D may be connected to other output PEs 1202D of other PV modules, for example, in series as a string. According to such an example, the PEs 1202D may be connected in parallel to produce a desired current, and the single output PE 1202D may adjust the current to match the current of the string. Alternatively, the single output PE 1202D may be connected to other single output PEs 1202D in parallel. PE 1202D may be a DC-DC converter (e.g., a buck converter, a boost converter, a buck-boost converter) which may be isolated (e.g., including a transformer) or not isolated. PE 1202D may be a direct current to alternating current (DC-AC) converter (e.g., an inverter, a microinverter) which may be isolated (e.g., including a transformer) or not isolated. The DC-AC converter may comprise circuitry which may include one or more switches, or one or more relays. For example, the DC-AC converter may include a full-bridge circuit. The DC-AC converter may include two half-bridge circuits, where the first half-bridge circuit includes a first buck conversion stage coupled to a first plurality of boost converters (e.g., boost converters 1203A-1203C in Fig. 3M), and a second half-bridge circuit comprises a second buck conversion stage coupled to a second plurality of boost converters (e.g., boost converters 1203D-1203F in Fig. 3M).

According to some examples, PEs 1202A-1202C may be DC-DC converters configured to form a biased sine wave signal. According to some examples, PEs 1202A-1202C may be DC-DC converters configured to form a rectified sine wave signal, and PE 1202D is a DC-AC converter which comprises a full bridge circuit configured to switch at a grid frequency (e.g., 50 Hertz, 60 Hertz). According to some examples, PEs 1202A-1202C are DC-DC converters configured to form a substantially fixed DC voltage at input connection to PE 1202D. According to some example, PE 1202D is a 3-level inverter. According to some examples, PE 1202D is a neutral point clamped (NPC) inverter. According to some examples, PE 1202D is a T-type neutral point clamped (TNPC) inverter. The neutral point of the NPC or TNPC inverter may be formed by a cascade connection of a plurality of capacitors between a negative input terminal to the inverter and a positive input terminal of the inverter. The neutral point may be connected to a casing of the photovoltaic module 1500.

According to some examples, control device 1270 in PE 1202 (e.g., control circuitry) may be configured to control PE 1202 such that the maximum voltage of photovoltaic module 1500 is a low-voltage (e.g., a safety voltage) during a non-production mode of operation. According to some examples, control device 1270 may be configured to operate photovoltaic module 1500 and PE 1200 to switch out one or more photovoltaic substrings 102AA-102AF during a non-production mode of operation. According to some examples, control device 1270 may be configured to operate a buck stage of PE 1202 (e.g., PE 1202D) to provide a low-output-voltage power supply during a non-production mode of operation. According to some examples, control device 1270 may be configured to operate photovoltaic module 1500 and PE 1200 to switch-in low-output-voltage power supply during a non-production mode of operation. A low-output-voltage power supply may be a low dropout (LDO) voltage regulator. In a non-production mode of operation, PE 1202 may be controlled to disconnect a photovoltaic panel from the outputs, and to connect the outputs to the LDO voltage regulator, which regulates the output voltage to a low voltage.

FIG. 3D depicts an alternative example electrical schematic of the example PV cell array 1510A and PV module 1500A of FIG. 3A. In the example configuration of FIG. 3D, the electrical midpoints of the substrings 102A are connected to the PEs 1202 as described in reference to FIG. 3A.

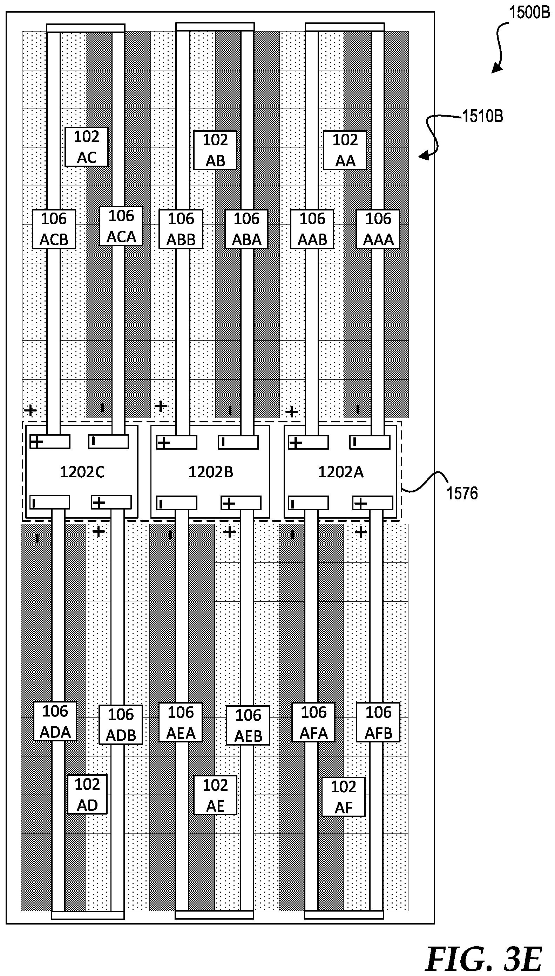

FIG. 3E depicts an example PV module 1500B and PV cell array 1510B having interleaved sub-substrings 106AAA-106AFB (generally, sub-substrings 106A) and integrated power electronics 1202. The PV module 1500B and PV cell array 1510B may be substantially similar to the PV module 1500A and PV cell array 1510A of FIG. 3A unless as explicitly described herein. Referring to FIG. 3E, the substrings 102A of the interleaved PV cell module 1500B and PV cell array 1510B may be connected to each other in parallel. However, the PV module 1500A and PV cell array 1510 may not include substring midpoint cross-ties. Additionally, as described above, all of the PEs 1202 may be integrated with a single PCB 1576. FIG. 3E depicts such an example configuration, wherein a single PCB 1576 may comprise a plurality of PEs 1202 (e.g., PEs 1202A-1202C). The PEs 1202 may be connected to each other on the PCB 1576 and/or in one or more junction boxes. Additionally, PCB 1576 may be single-layered or multilayered. Multilayered PCB 1576 may facilitate connection of the substrings 102A by disposing otherwise intersecting conductors on different substrate layers.

As depicted in FIG. 3A, the PEs 1202 may be connected to each other in parallel. However, the PEs 1202 may be alternatively connected. FIG. 3F depicts an example electrical schematic of the example PV cell array 1510B of FIG. 3E. Referring to FIG. 3F, depending on PV cell array design considerations, the PEs 1202 of PV cell array 1510B may be connected in series. Accordingly, a portion of the substrings 102A may be connected in parallel as groups, and the groups may be connected in series through the PEs 1202. For example, the midpoints of physically opposed substrings 102A (e.g., substrings 102A disposed substantially opposite each other on the first and second halves of the PV cell array 1510B) may be connected to each other in parallel. For example, the midpoints of substrings 102AA and 102AF may be connected to each other in parallel as a group of parallelly connected substrings. This group of parallelly connected substrings 102A may be connected to an associated PE 1202 (following the preceding example, PE 1202A). The PEs 1202 (e.g., PE 1202A-1202C) may be connected to each other in series.

Referring to FIG. 3G, in an example configuration, the series connection of PEs 1202A-1202C shown in FIG. 3F may be connected to a single output PE 1202D. The single output PE 1202 may be integrated with a PV module (e.g., PV module 1500) or may be connected to outputs of the PV module 1500A (e.g., to output leads of PV module 1500A). PE 1202D may be similar to PE 1202D as described above in conjunction with Fig. 3C.

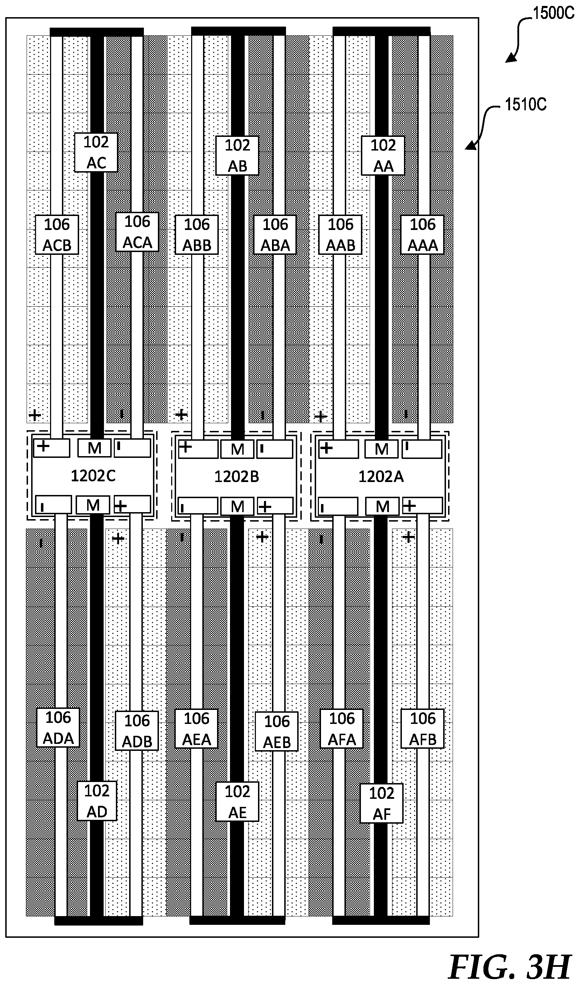

FIG. 3A depicts an example PV cell array 1510A and PV module 1500A wherein the midpoints of all of the substrings 102A are cross-tied. FIG. 3E depicts an example PV cell array 1510B and PV module 1500B wherein none of the midpoints of the substrings are cross-tied. FIG. 3H depicts an alternative example interleaved PV module 1500C and PV cell array 1510C. Referring to FIG. 3H, a portion of the electrical midpoints of the substrings 102A (e.g., midpoint terminals) may be cross-tied (e.g., connected). Referring, to FIG. 3H, for example, the midpoints of physically opposed substrings 102A (e.g., substrings disposed opposite each other on the two halves of the PV module 1500C) may be cross-tied (e.g., connected). Whereas, the midpoints of the substrings 102A of each of the first and second halves of the PV module 1500C, may not be connected. Additionally, as depicted in FIG. 3H, the midpoints of opposing substrings 102A (e.g., substring 102AC and substrings 102 AD) may be connected to the associated PE 1202 (following the preceding example, PE 1202C). Alternatively, one or more of the substring midpoints may not be connected to the associated PE 1202. Additionally, FIG. 3H depicts the midpoint connectors routed between sub-substrings 106A of each substring 102A. Additionally or alternatively, one or more of the midpoint connectors may be routed variously (e.g., between other sub-substrings, along the edge of the PV cell array 1510C, behind the PV cell array 1510C, etc.). Additionally, the PEs 1202 of FIG. 3H may be interconnected variously, for example, in series or parallel.

FIG. 3I depicts an example electrical schematic of the example PV cell array 1510C of FIG. 3H. In the example of FIG. 3I, the PEs 1202 are connected in series. Additionally or alternatively, the PEs 1202 of FIG. 3H may be connected in parallel. Additionally, in the example configuration of FIG. 3I, opposing substrings 102A (e.g., 102AC and 102AD, 102AB and 102AE, 102AA and 102AF) are connected in parallel with each other but not in parallel with other substrings 102A of the PV cell array 1510C. Additionally or alternatively, all of the substrings 102A or another portion, of PV cell array 1510C may be connected to each other in parallel. Additionally, the midpoints of the substrings 102A of FIG. 3I are not connected to the PEs 1202. FIG. 3J depicts an alternative example electrical schematic of the example PV cell array 1510C of FIG. 3H. Referring to FIG. 3J, the midpoints of parallelly connected groups of substrings 102A may be connected to their associated PE 1202.

FIGS. 3A-3J depict configurations in which two substrings are connected to a single PE 1202. Alternatively, PEs 1202 may be connected to substrings on a more granular level. FIG. 3K depicts an example interleaved PV module 1500D and PV cell array 1510D having integrated PEs. Referring to FIG. 3K, each substring 102AA-102AF (generally, 102A) may be connected to an associated PE 1202. As depicted in FIG. 3K, two PEs 1202 may be disposed on a single PCB 1576. For example, the PEs 1202A and 1202B may be disposed on PCB 1576A. Additionally or alternatively, some or all of each PE 1202 may have a dedicated PCB 1576. Additionally or alternatively, some or all of all of the PEs 1202 may be disposed on a single PCB 1576. For example, all of PEs 1202A-1202F may be disposed on a single PCB 1576. PV cell array 1510D may be substantially similar to PV cell array 1510A of FIG. 3A other than as expressly described.

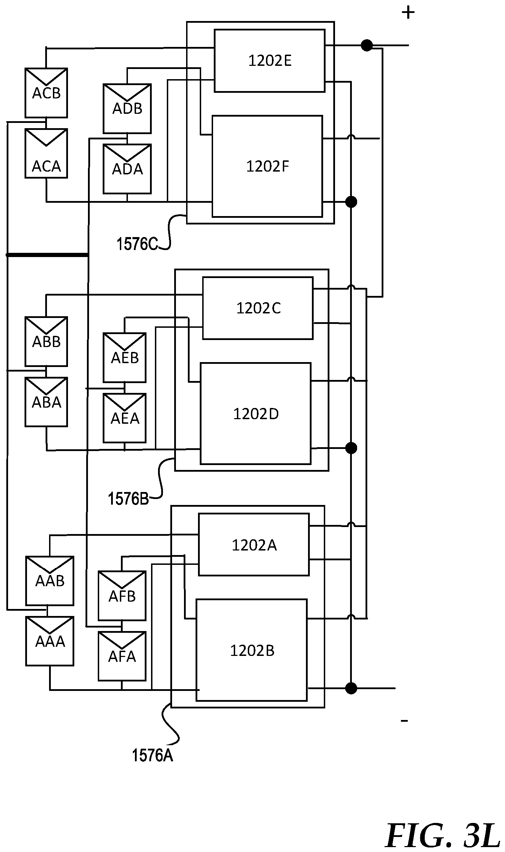

FIG. 3L depicts an example electrical schematic of the example PV cell module 1500D and PV cell array 1510D of FIG. 3K. As depicted in FIG. 3L, each substring 102A may be connected to an associated PE 1202. All, or a portion thereof, of the plurality of PEs 1202 may be connected to each other in parallel. Alternatively, all, or a portion thereof, of the plurality of PEs 1202 may be connected in series.

PEs 1202 of FIGS. 3A-3N may comprise one or more of a power optimizer (e.g., MPPT controller etc.), a DC/DC converter, (e.g., buck, boost, buck-boost, buck+boost, etc.), a DC/AC converter (e.g., inverter, microinverter, etc.). For example, depending on design considerations, such power optimizers may comprise one or more DC/DC converters. Additionally, depending on considerations, the DC/DC converters may be differently configured. For example, according to one or more example configurations, the PEs 1202 of FIGS. 3A-3N may be configured as buck, boost, buck-boost, and/or buck+boost converters.

For example, likelihood of shade conditions (e.g., partial shade conditions) as well as desired output power may be considered for design configurations. For example, where the likelihood of partial shade conditions are decreased (e.g., commercial/utility installations), the PV arrays and PV modules of FIGS. 3A-3D may be designed for a single stage DC/DC converter (e.g., buck or boost). For example, according to such an example, the PV module and PV cell array may be designed to produce relatively low current and relatively high voltage. In such an example, the PEs 1202 may be buck only since raising the current would be the most likely concern. Alternatively, in such an example, the PV module and PV cell array may be designed to produce relatively high current and relatively low voltage. In such an example, the PEs 1202 may be boost only, since reducing the current may be the most likely concern.

Alternatively, the PV cell arrays and PV modules of FIGS. 3A-3N may be designed for installations in which the likelihood of a partial shade condition may be increased (e.g., for residential installations, commercial installations with shading concerns, etc.). According to such examples, buck-boost and/or buck+boost converters may be used. For example, buck mode may be used to lift the current of substrings 102A where desired, and boost mode may be used to reduce the current of substrings 102A where desired, for example, based on mismatched substring 102A production.

FIGS. 3A-3N depict example PV arrays and PV modules with substrings having 10 PV cells. However, the disclosure is not so limited, and any number of cells per substrings is contemplated herein. Additionally, the cells of the substrings 102A of the FIGS. 3A-3N (and all other FIGS. and configurations disclosed herein) may be any size full PV cells (e.g., G12 (210mm x 210mm), M10 (182mm x 182mm), etc.) or any fractional cut of any full size PV cell (e.g., ½ cut, 1/3 cut, ¼, cut, 1/5 etc.). Additionally, the PV cells may be differently cut along their length and width (e.g., a G12 cell may be ½ cut along its length and in 1/3 along its width for a final cell measuring substantially 105mm x 70mm). Additionally, the PV cells of the substrings herein may be substantially rectangular shaped and/or substantially square shaped, however, the present disclosure is not so limited and other shapes (e.g., octagonal) are contemplated herein.

In addition to power and shading concerns as described herein, PV modules and PV cell arrays of the present disclosure may be designed and/or optimized with shipping considerations. For example, the PV modules of the present disclosure may comprise a width of no more than 1135mm. Additionally, the PV modules of the present disclosure may comprise a height. The height may be configured, such that a fractional portion of D/H, where D (e.g., 12192 mm) is a depth of a standard-size shipping container may be less than 0.2, 0.1, or 0.5. Although the above parameters may be designed to in light of shipping considerations, the PV modules of the present disclosure are not so limited, and the width may be more than 1135mm and the fractional portion of D/H may be larger than 0.2, in light of other design considerations.

FIG. 3M depicts an example of a configuration of PV module 1500E having substrings 102AA-102AF, and integrated power electronics (e.g., PE 1202). In Fig. 3M, integrated power electronics 1202 includes a plurality of boost converters 1203A, 1203B, 1203C, 1203D, 1203E, and 1203F, and buck converter 1204. Either one, some or all of boost converters 1203A, 1203B, 1203C, 1203D, 1203E, and 1203F, and buck converter 1204 may be isolated or not isolated. In the example configuration of FIG. 3M, each substring 102AA-102AF is connected to inputs of a corresponding boost converter of boost converters 1203A, 1203B, 1203C, 1203D, 1203E and 1203F. The positive outputs of boost converters 1203A-1203F, and the positive input of buck converter 1204 are connected at a connection node 1518A. The negative outputs of boost converters 1203A-1203F, and the negative input of buck converter 1204 are connected at a connection node 1518B. Thus, the outputs of boost converters 1203A-1203F are connected in parallel, and boost converters 1203A-1203F have a common negative terminal. Having a common negative terminal may provide a single voltage reference, which may be used by gate drivers, auxiliary power supplies, controllers, and the like.

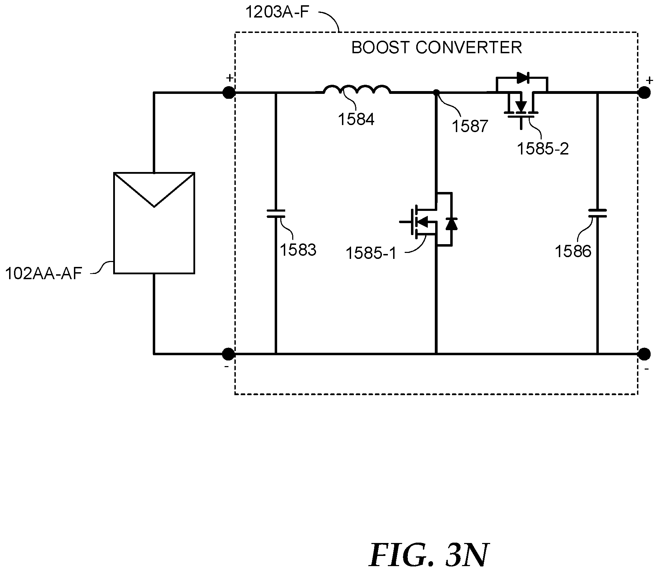

Buck converter 1204 includes a first switch 1578-1 (e.g., high side switch) and a second switch 1578-2 (e.g., low side switch), an inductor 1580 and an output capacitor 1582. FIG. 3M depicts first switch 1578-1 and second switch 1578-2 as metal oxide semiconductor field effect transistors (MOSFETs). However, first switch 1578-1 and second switch 1578-2 may be bipolar junction transistors (BJTs), insulated gate bipolar transistors (IGBTs), silicon rectified controlled (SRC) switches, and the like. Buck converter 1204 may further include an input capacitor 1583 connected between the input terminals of buck converter 1204. Alternatively, or additionally, as described below in conjunction with FIG. 3N, each of boost converters 1203A-1203F may include a respective output capacitor (not shown in FIG. 3M) connected between the output terminals of the respective boost converter.

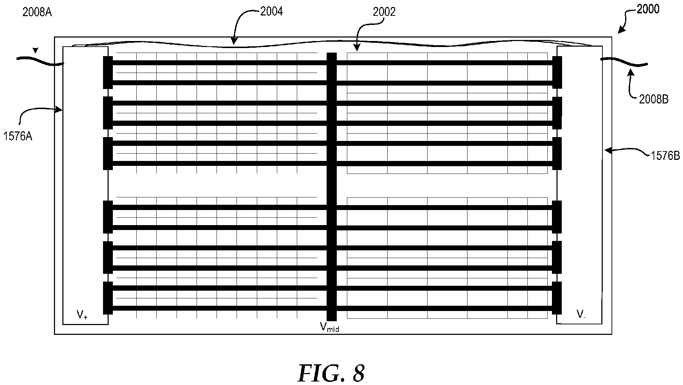

First switch 1578-1 and second switch 1578-2 are connected to each other at a connection point (e.g., switching node) 1579. First switch 1578-1 is further coupled to the positive input terminal of buck converter 1204. Second switch 1578-2 is further coupled to the negative input terminal of buck converter 1204. Inductor 1580 may be connected to switching node connection point 1579 and first output terminal 1516A of PV module 1500E. Capacitor 1582 may be connected to first output terminal 1516A and second output terminal 1516B of PV module 1500E. Second output terminal 1516B may be connected to the negative input terminal of buck converter 1204. Boost converters 1203A, 1203B, 1203C, 1203D, 1203E, and 1203F, and buck converter 1204 may be integrated on a PCB 1576 or a plurality of PCBs (e.g., as may be shown herein in conjunction with FIGS. 8-17). PV module 1500E may further have a bypass diode where the cathode of the bypass diode is connected to first output terminal 1516A and the anode of the bypass diode is connected to first output terminal 1516B. The bypass diode may be implemented using an ideal diode configuration which includes a switch which transition into a conducting state in case bypass is required.

Fig. 3N shows an example of a boost converter which may be used with any one of boost converters 1203A, 1203B, 1203C, 1203D, 1203E and 1203F (e.g., of FIG. 3M). Boost converter 1203A-F may include a first switch 1585-1 and a second switch 1585-2, and an inductor 1584. Boost converter 1203A-F may include an input capacitor 1583 and an output capacitor 1586. First switch 1585-1 and second switch 1585-2 are connected to each other at a connection point (e.g., switching node) 1579. Inductor 1584 is connected between the positive input terminal and connection point 1587. First switch 1585-1 is further coupled to the negative input terminal. The negative input terminal is further coupled to the negative output terminal. Second switch 1585-2 is further connected to the positive output terminal. Input capacitor 1583 may be connected between the positive input terminal and the negative input terminal. Output capacitor 1586 may be connected between the positive output terminal and the negative output terminal.

Boost converters 1203A, 1203B, 1203C, 1203D, 1203E and 1203F and/or buck converter 1204 may be isolated (e.g., including a transformer) or non-isolated. In cases in which boost converters 1203A, 1203B, 1203C, 1203D, 1203E and 1203F and/or buck converter 1204 are non-isolated converters, the creepage and clearance between a frame of PV module 1500E and PV cell array 1510E, between substrings 106, and/or between PV cells 104 may be determined based on the voltage that may be produced by boost converters 1203A, 1203B, 1203C, 1203D, 1203E and 1203F. The voltage produced boost converters 1203A, 1203B, 1203C, 1203D, 1203E and 1203F may be on the order of hundreds of volts (e.g., 500, 750V, 800V).

In cases in which boost converters 1203A, 1203B, 1203C, 1203D, 1203E and 1203F and/or buck converter 1204 are isolated converters, the creepage and clearance between the frame of PV module 1500E and PV cell array 1510E, between substrings 106, and/or between PV cells 104 may be reduced. For example, the windings of an isolating transformer may have a ratio between a number of primary side windings and a number of secondary side windings, which may determine a transformer voltage conversion ratio. Thus, for example, while the voltage at the input of boost converters 1203A, 1203B, 1203C, 1203D, 1203E and 1203F, from the corresponding substrings 106, or between connection points 1518A and 1518B, may on the order of up to tens of volts (e.g., 5V, 10V, 15V, 20V), the voltage at the output of PV module 1500E may be on the order of hundreds of volts. Thus, the creepage and clearance between a frame of PV module 1500E and PV cell array 1510E, between substrings 106, and/or between PV cells 104 may be determined for tens of volts when isolated converters are used, versus hundreds of volts in case non-isolated converters are used. Thus, when using isolated converters, the power to area ratio (W/m²) of PV module 1500E may be increased.

According to an example of operation of PV module 1500E, boost converters 1203A, 1203B, 1203C, 1203D, 1203E, 1203F, and buck converter 1204 may be in a low voltage mode. In the low voltage mode, boost converters 1203A-1203F may not convert power. For example, in the low voltage mode, boost converters 1203A-1203F may be in a bypass mode. In the bypass mode, first switch 1585-1 may be in a non-conducting state (OFF), and second switch 1585-2 may be in either the conducting state (ON) or OFF. However, preferably, in the bypass mode, second switch 1585-2 may be ON, for example, to reduce the voltage drop across the switch (e.g., from a voltage drop across the body diode of second switch 1585-2 to a voltage drop across the ON resistance of the second switch 1585-2). Therefore, the voltage at the output terminals of boost converters 1203A-1203F, and thus at the input terminals of buck converter 1204, is substantially the voltage generated by each of substrings 102AA-102AF. In the low voltage mode, control device 1270 (FIG. 2) may control buck converter 1204 to down-convert the voltage from substrings 102AA-102AF to a voltage that is lower than the voltage from substrings 102AA-102AF. For example, control device 1270 (e.g., control device 1270 of FIG. 2) may control buck converter 1204 to convert voltage received from substrings 102AA-102AF to a safety voltage (e.g., 0.5V, 1V). Control device 1270 may control buck converter 1204 to down convert the voltage from substrings 102AA-102AF by alternately controlling first switch 1578-1 and a second switch 1578-2 between ON and OFF, at a duty cycle corresponding to the required conversion rate (e.g., the ratio between the output voltage and the input voltage). In some cases, for example, where PV module 1500E is producing less current than other PV modules being serially coupled to the first output terminal 1516A and the second output terminal 1516B of PV module 1500E, control device 1270 may control buck converter 1204 to convert voltage received from substrings 102AA-102AF to a lower voltage level, in order to increase current output by buck converter 1204, such that the current matches current carried by serially-connected modules.

Continuing with the example of operation of PV module 1500E, power electronics 1202 may transition from a low voltage mode to a voltage increase mode. For example, power electronics 1202 may receive a signal, via communication device 1250 (e.g., communication device 1250 of FIG. 2), indicating the transition to the voltage increase mode. Based upon detecting the voltage increase mode, control device 1270 (e.g., control device 1270 of FIG. 2) may control buck converter 1204 to increase the output voltage of PV module 1500E (the voltage between first output terminal 1516A and second output terminal 1516B) until the output voltage reaches a threshold voltage (Further elaborated below in conjunction with step 1596 in FIG. 3M). Power electronics 1202 may monitor output voltage using sensor(s) 1280 (e.g., sensor(s) 1280 of FIG. 2). Responsive to the output voltage reaching a threshold voltage, control device 1270 may control buck converter 1204 to a bypass mode. Control device 1270 may control buck converter 1204 to a bypass mode by controlling first switch 1578-1 to be ON and second switch 1578-2 to be OFF. Controller device 1270 may control each of boost converters 1203A, 1203B, 1203C, 1203D, 1203E, and 1203F to up convert the voltage from the corresponding substring 102AA-102AF, for example, by alternately controlling first switch 1558-1 and a second switch 1585-2 between ON and OFF, at a duty cycle corresponding to the required conversion rate. When power is drawn from PE 1202, controller device 1270 may control each of boost converters 1203A-1203F to draw power from the corresponding substring 102AA-102AF at an MPP of the substring.

When boost converters 1203A, 1203B, 1203C, 1203D, 1203E, and 1203F do not convert power, the voltage generated by the corresponding substring 102AA-102AF is reflected to the output terminals of the corresponding boost converter of boost converters 1203A-1203F, and thus to the input terminals of buck converter 1204. As described above, responsive to the output voltage reaching a threshold voltage, control device 1270 may control buck converter 1204 to a bypass mode. This threshold voltage may be the voltage generated by a substring of substrings 102AA-102AF. Since in bypass mode first switch 1578-1 is ON, the voltage rating of first switch 1578-1 might not exceed the voltage generated by a substring. Since in bypass mode second switch 1578-2 is OFF, the voltage rating of first switch 1578-2 may be the full voltage rating of PE 1202 (e.g., the maximum voltage at the output terminals of boost converters 1203A-1203F).

Following is a numerical example. This example is for explanation purposes only and should not be considered as limiting. PV module 1500E may be a G12 module where each substring includes 24, ½ cut cells connected in series. Each ½ cut cell may generate between about 0 to 0.6 Volts (e.g., the open circuit voltage of the cell is about 0.6 Volts). When operating at the MPP, a cell may generate, for example, 0.5 Volts. Therefore, the open circuit voltage of each substring is 14.4 Volts. In cases in which boost converters 1203A, 1203B, 1203C, 1203D, 1203E, 1203F do not convert power, voltage level at the output terminals of the boost converters, and thus at the input terminals of buck converter 1204, is 14.4 Volts. In the low power mode, control device 1270 (e.g., control device 1270 of FIG. 2) may control buck converter 1204 to down convert the 14.4 Volts (e.g., to 1V). Upon transition to voltage increase mode, buck converter 1204 may increase the output voltage from PV module 1500E until this voltage reaches 14.4 Volts. Thereafter, buck converter 1204 may transition to bypass mode, and boost converters 1203A-1203F may up convert the voltage levels from the corresponding substrings 102AA-102AF to a level above 14.4 Volts. Since first switch 1578-1 only switches until the output voltage of PV module 1500E reaches 14.4 Volts, the voltage rating of first switch 1578-1 may be 14.4 Volts. Thus, when selecting a standard component for implementation of first switch 1578-1, one may select a MOSFET having a blocking voltage rating of, e.g., 15V. One may use a MOSFET having a blocking voltage rating of 20V or 25V for a safety margin. If boost converters 1203A through 1203F are configured to provide a maximum output of, e.g., 60V, second-switch 1578-2 may be selected to have a blocking voltage rating of 60V or, with a margin of safety, 80V. Configuration and control of buck converter 1204 to operate in bypass mode when input voltage is above a threshold, and the selection of a low-voltage rating first switch 1578-1, may result in reduction of cost and/or increase in efficiency, relative to a typical buck converter (e.g., in which the two transistors may be rated to withstand the full input voltage rating of the converter).

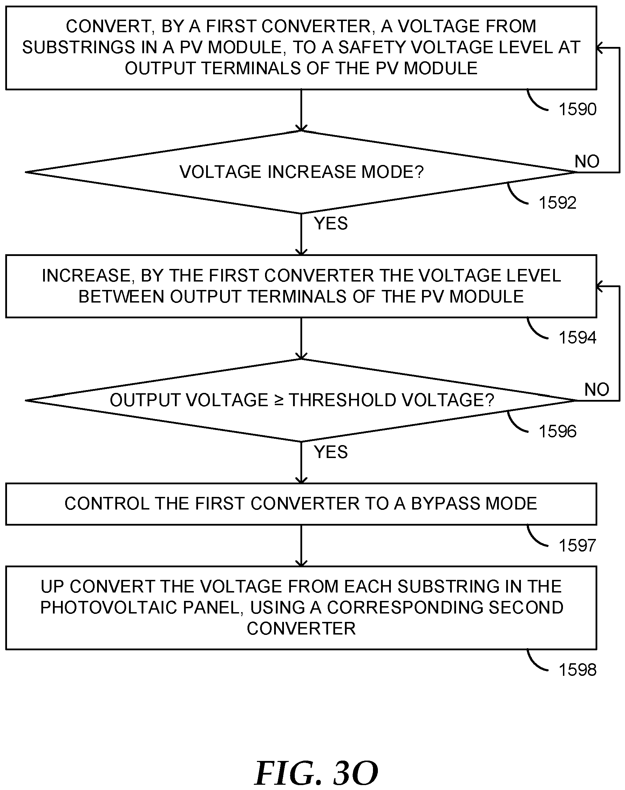

Reference is made to FIG. 3O which depicts an example method for operating PV module 1500 and integrated PE 1202 which includes boost converters 1203A, 1203B, 1203C, 1203D, 1203E, 1203F, and buck converter 1204 as shown in FIG. 3M. In step 1590, a first converter (e.g., buck converter 1204) may convert a voltage from substrings (e.g., substrings 102AA-102AF) in a PV module (e.g., PV module 1500), to a safety voltage level at output terminals (first output terminal 1516A and second output terminal 1516B) of the PV module. Furthermore, a plurality of second converters (e.g., boost converters 1203A, 1203B, 1203C, 1203D, 1203E, 1203F and 1204) may be in a bypass mode.

In step 1592, a control device (e.g., control device 1270) may determine a transition to a voltage increase mode. For example, the control device may detect the transition to a voltage increase mode by receiving a signal, from communication device (e.g., communication device 1250), indicating the transition to the voltage increase mode. The control device may detect the transition to a voltage increase mode by receiving measurements (e.g., from sensor(s) 1280) of the flow of current through the output terminals of the PV module. If the control device determines a transition to voltage increase mode, the method may proceed to step 1594, else, the method may return to step 1590.

In step 1594, the first power converter raises the voltage between the output terminals of the PV module. For example, buck converter 1204 may raise the voltage level between first output terminal 1516A and second output terminal 1516B.

In step 1596, the control device may determine if the voltage level between the output terminals of the PV module (e.g., the output voltage) reached a threshold voltage. For example, control device 1270 may receive measurement from sensor(s) 1280 of the voltage level between first output terminal 1516A and second output terminal 1516B of PV module 1500E. This threshold voltage may be, for example, the voltage level generated by each substring of substrings 102AA-102AF. The voltage threshold may be the blocking voltage rating of a switch in the first converter. In the example brought herein above, the rating of first switch 1578-1 of buck converter 1204 may be 14.4V, 5V, 20V, or 25V. The threshold voltage may be a fraction (e.g., 90%, 92%, 95 %, 98%) of the input voltage. This fraction of the input voltage may be determined by measurement from sensor(s) 1280, or based on the duty cycle of the PWM signal used by buck converter 1204 for the conversion. As mentioned above, a switch having a low blocking voltage rating may reduce cost and/or increase efficiency. However, a switch having a high blocking voltage rating may enable buck converter 1204 to operate with a larger variety of photovoltaic modules panels (e.g., having different sizes of substrings). If the voltage level reached or exceeded the threshold voltage, the method may proceed to step 1597. If the voltage level did not reach the threshold voltage, the method may return to step 1594.

In step 1597, the control device may control the first power converter to a bypass mode. For example, control device 1270 may control buck converter 1204 to transition to bypass mode by controlling first switch 1578-1 to be ON and second switch 1578-2 to be OFF.

In step 1598, the control device may control each of a plurality of second converters to up convert the voltage from a corresponding substring. For example, control device 1270 may control boost converters 1203A, 1203B, 1203C, 1203D, 1203E, and 1203F to up convert the voltage from corresponding substrings 102AA-102AF.

It is noted that the order of the steps in FIG. 3O is brought herein as an example. A different order may be used. For example, step 1598 may precede step 1597. Also, some steps in FIG. 3O may be optional. For example, in case the required output voltage from module 1500 is the voltage generated by each of the substring, boost converters 1203A, 1203B, 1203C, 1203D, 1203E, and 1203F, and buck converter 1204 may be in bypass mode. Thus, step 1590 and/or step 1598 may be optional.

The example of a configuration of a PV module having substrings and integrated power electronics shown in FIG. 3M may be used for additional purposes, such as PV module monitoring, maintenance and characterization. The configuration of a PV module having substrings and integrated power electronics shown in FIG. 3M may be used for monitoring, maintenance and characterization of each of substrings 102. An example of PV module maintenance may occur in case the PV panel is covered (fully or partially) with snow, ice, and/or fog. In such cases, PE 1202 may provide a reverse current to a substring or substrings in PV module 1500E. Such a reverse current may increase the temperature of the cells in the substring, thus melting the ice and/or snow, and/or evaporating the fog. PE 1202 may include bidirectional converters which may either draw power from a corresponding substring or provide power to the corresponding substring. For example, boost converters 1203A-1203F (FIG. 3M) may be bidirectional converters, which may convert power from the corresponding substring 102AA-102AF, or provide power to the corresponding substring 102AA-102AF. Buck converter 1204 may also be a bidirectional converter.

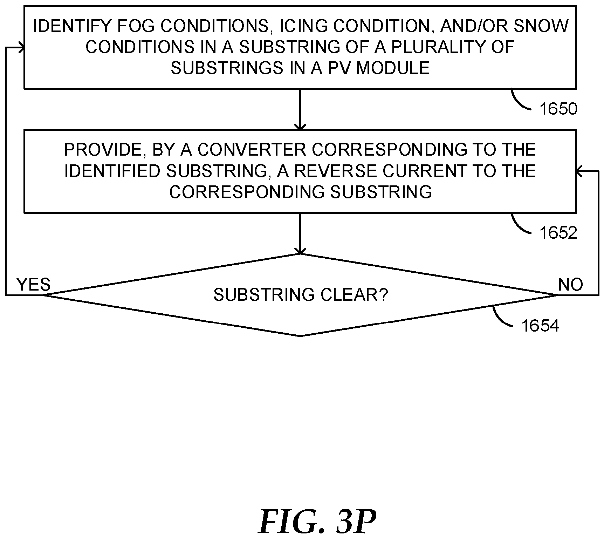

Reference is made to FIG. 3P which shows a method for maintaining a PV module. In step 1650, a control device (e.g., control device 1270) may identify fog conditions, icing conditions, and/or snow conditions in a substring of a plurality of substrings (substring 102AA-102AF of Fig. 3M) in a PV module (e.g., PV module 1500). According to one example, sensors(s) 1280 may include a temperature sensor(s) located at various locations on PCB 1576. The control device may receive temperature measurements from the temperature sensor(s). In cases in which the level of the temperature (as measured by one or more of the temperature sensors) is below a threshold temperature (e.g., below 5°C, below 0°C, below -2°C), the control device may identify fog conditions, icing condition, and/or snow conditions. According to another example, the control device may identify fog conditions, icing condition, and/or snow conditions based on MPP of the substring being below a threshold power level. The MPP of the substring may be determined by MPPT 1295 (e.g., MPPT 1295 of FIG. 2). According to another example, the control device may identify fog conditions, icing condition, and/or snow conditions based on the short circuit current of the substring being below a threshold short circuit current level. The control device may use a combination of the above conditions (e.g., temperature below a threshold temperature and MPP below a threshold power level). The control device may identify fog conditions, icing condition, and/or snow conditions based on input from a user.

In step 1652, based on identifying fog conditions, icing condition, and/or snow conditions, the control device may control a power converter corresponding to the identified substring to provide reverse current to the substring. For example, and with reference to FIG. 3M, in case substring 102AC is identified with fog conditions, icing conditions, and/or snow conditions, the control device may control boost converter 1203A to provide a reverse current to substring 102AA. When providing a reverse current to substring 102AA, boost converter 1203A may operate as a buck converter, converting power from connection nodes 1518A and 1518B to substring 102AA. Boost converter 1203A may use power converted by one or more of boost converters 1203B-1203F from the corresponding substring 102AB-102AF, to provide the reverse current to substring 102AA. Boost converter 1203A may use power from terminals 1516A and 1516B to provide the reverse current to substring 102AA. When using power from terminals 1516A and 1516B, buck converter 1204 may be inactive (e.g., switches 1578-1 and 1578-2 may be OFF), or active (e.g., operating as a boost converter converting power terminals 1516A and 1516B to connection nodes 1518A and 1518B). The power at terminals 1516A and 1516 may be provided by a bidirectional, grid connected inverter, which may rectify power from the grid.

In step 1654, the control device may determine if the substring is clear from fog, ice, and/or icing conditions. The control device may determine if the substring is clear based on temperature, MPP, or the short circuit current level. For example, the control device may receive temperature measurements from the temperature sensor(s). In cases in which the level of measured temperature is above a threshold temperature (e.g., a 0°C, above 5°C, above 10°C), the control device may determine that the substring is clear. In cases in which the MPP of the substring increases above a threshold power level, the control device may determine that the substring is clear. In cases in which the short circuit current of the substring increases above a current threshold level, the control device may determine that the substring is clear. From step 1654, the method may return to step 1650.

According to the disclosure herein, PE 1202 may require auxiliary power to operate the various modules (e.g., control device 1270, communication device 1250, gate drivers of the switches of power converter 1240, safety device 1260, MPPT 1295). In the example shown in Fig. 3M, PE 1202 may receive the auxiliary power either from one or more of substrings 102AA-102AF, from terminals 1516A and 1516B, or from both. When boost converters 1203A-1203F and buck converter 1204 are inactive, no voltage is applied between terminals 1516A and 1516B, and light irradiates on substrings 102AA-102AF, the voltage between connection nodes 1518A and 1518B may be the voltage generated by substrings 102AA-102AF. When boost converters 1203A-1203F and buck converter 1204 are inactive, no light irradiates on substrings 102AA-102AF, and a voltage is applied between terminals 1516A and 1516B (e.g., by a bidirectional grid connected inverter rectifying power from the grid), the voltage between connection nodes 1518A and 1518B may be the voltage between terminals 1516A and 1516B. PE 1202 may use the voltage between connection nodes 1518A and 1518B. Thus, PE 1202 may use power from connection nodes 1518A and 1518B for auxiliary power even if light does not irradiate on substrings 102AA-102AF. For example, PE 1202 may operate even if all substrings are covered with snow, ice or fog, or at night conditions (e.g., to melt snow during the night before the beginning of the next day).

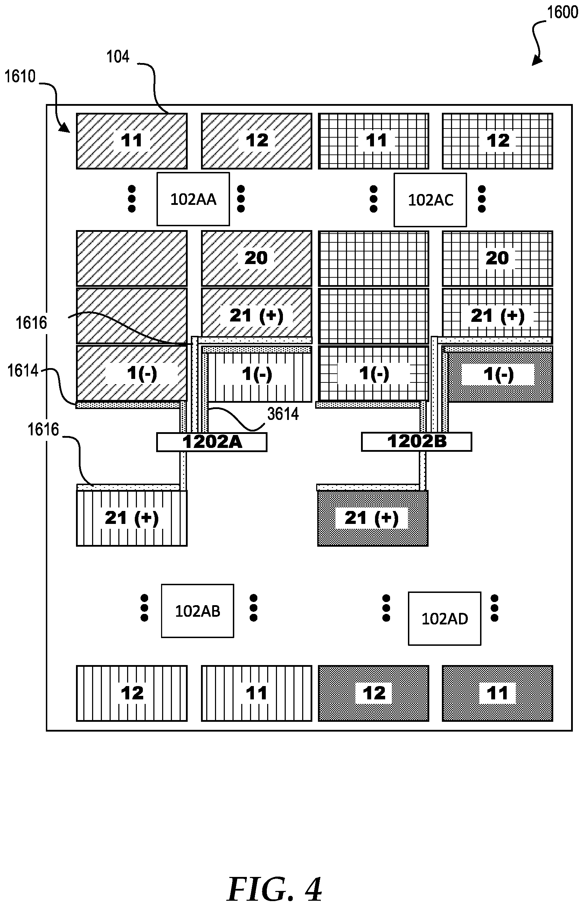

Additionally, FIGS. 3A-3N depict example PV modules and PV cell arrays with substrings 102A having an even number of PV cells 104. However, the disclosure is not so limited and substrings may comprise an odd number of PV cells 104. FIG. 4 depicts an example interleaved PV module 1600 and PV cell array 1610 having an odd number of PV cells 104 per substring 102AA-102AF (generally, substrings 102A). In FIG. 4, different shading simply depicts different substrings 102A. FIG. 4 depicts substrings 102A comprising 21 PV cells (the number in the PV cells 104 of FIG. 4 denotes the number PV cell in the substrings 102A), however, the disclosure is not so limited and similar configurations may be practiced with any odd number of PV cells 104 per substring 102A.

PV module 1600 and PV cell array may 1610 may additionally comprise PE 1202. Each PE 1202 may be connected to one or more substrings 102A. Since PV module 1600 includes substrings 102A comprising an odd number of PV cells 104, if PEs 1202 are integrated with the PV module 1600 and PV cell array 1610, one or more PV cells 104 of a first substring 102A may be disposed on the side of the PV module 1600 wherein majority of a second substring 102A is disposed. For example, PV cell 104 number 1 of substring 102AB may be disposed on the side of the PV module 1600 and PV cell array 1610 on which substring 102AA is disposed (e.g., above the PE 1202A in the example configuration and orientation of FIG. 4). Accordingly, PE may be configured to connect to at least three substring 102A terminals on a first side, and at least 1 substrings terminal on a second side. Accordingly, PV module 1600 may comprise negative conductors 1614 of substrings 102AA and 102AB, and positive conductor 1616 of substring 102AB connected to PE 1202A at a first side thereof, and positive conductor 1616 of substring 102AB connected to a second side thereof.

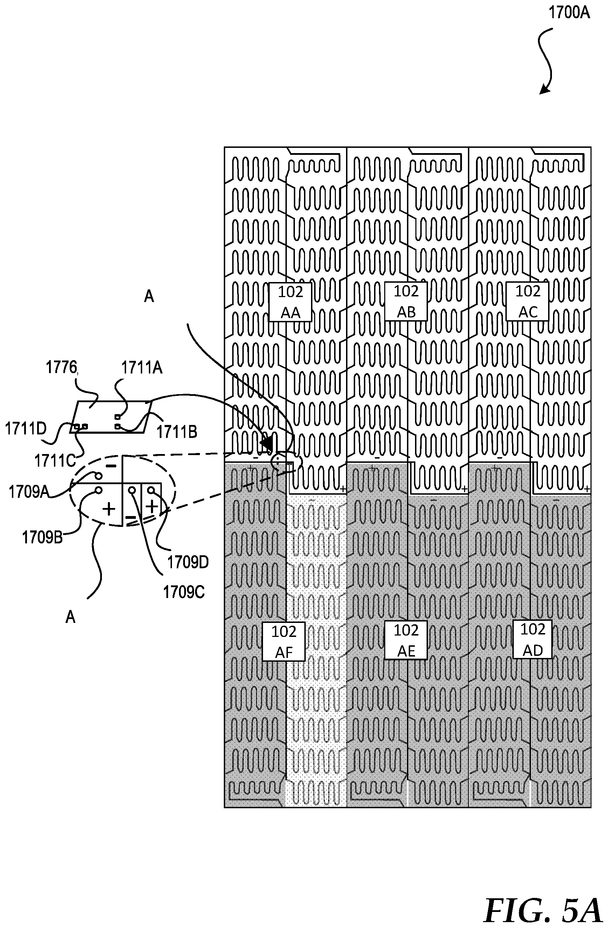

In FIG. 5A, call-out A is a magnified depiction of region A of conductive backsheet 1700A. Conductive backsheet 1700A may include connectors 1709A-1709D (generally, connectors 1709) (e.g., holes, e.g., formed by drilling) configured to be mated with corresponding connectors 1711A-1711D (generally, connector 1711) (e.g. protrusive connectors) of a PCB 1776. For example, connector 1709A may correspond to (e.g., may be coupled to) a first negative potential terminal of a first substring 102A (e.g., substring 102AA in the example of FIG. 5A) coupled to conductive backsheet 1700A. Connector 1709C may correspond to a second negative potential terminal of a second substring 102A (e.g., substring 102AF in the example of FIG. 5A) coupled to conductive backsheet 1700A. PCB 1776 may be installed to (e.g., plugged into, mated with, connected to, etc.) conductive backsheet 1700A. PCB 1776 may comprise connectors 1711C and 1711A spatially positioned and/or disposed such that they may be coupled to connectors 1709C and 1709A, respectively, if PCB 1776 is installed to conductive backsheet 1700A. Connectors 1711A and 1711C may be electrically interconnected by PCB 1776.

Similarly, connector 1709B may correspond to (e.g., may be coupled to) a first positive potential terminal of a first substring 102A (e.g., substring 102AF in the example of FIG. 5A) coupled to conductive backsheet 1700A. Connector 1709D may correspond to a second positive potential terminal of a second substring 102A (e.g., substring 102AA in the example of FIG. 5A) coupled to conductive backsheet 1700A. PCB 1776 may comprise connectors 1711B and 1711D spatially positioned and/or disposed such that they may be coupled to connectors 1709B and 1709D, respectively, if PCB 1776 is installed to conductive backsheet 1700A. Connectors 1711B and 1711D may be electrically interconnected by PCB 1776.

Additionally, as described herein, PCB 1776 may comprise a multilayer PCB with multiple electrically connecting traces disposed on separate layers as to avoid conductive intersections. PCB 1776 may additionally comprise power electronics (e.g., PE 1202) which may be configured as one or more power converters configured to convert power drawn from the substrings.

For clarity of depiction, FIG. 5A only depicts connectors 1709 of substrings 102AA and 102AF, and PCB 1776 and connectors 1711 associated with substrings 102AA and 102AF. However, it should be understood that similar connectors and PCBs may be incorporated with and/or disposed on conductive backsheet 1700A at the interface of one or more of the additional substrings 102A. For example, similar connectors and PCBs may be incorporated with and/or disposed on conductive backsheet 1700A at the interface between substrings 102AB and 102AE, and/or at the interface between substrings 102AC and 102AD.

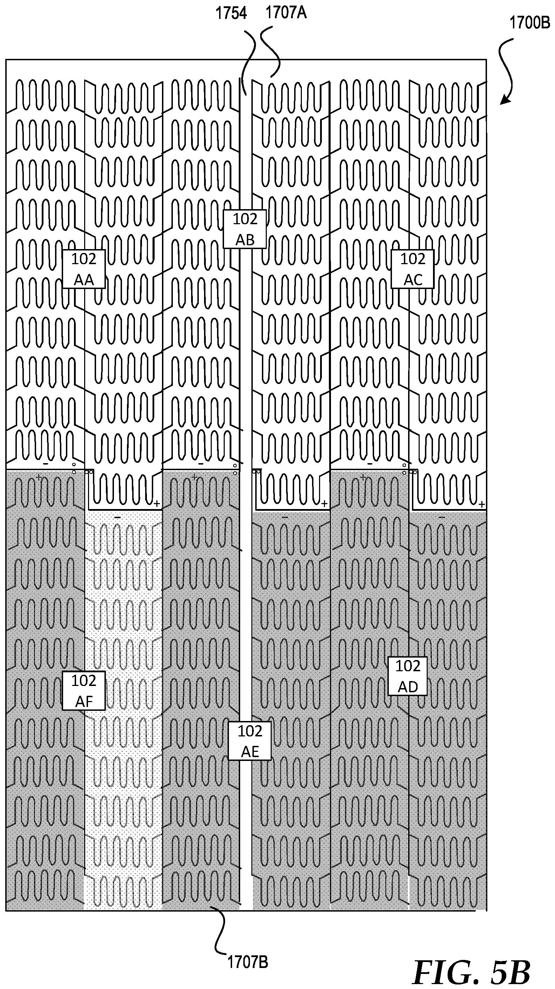

The electric potential midpoints of the substrings 102A of the PV cell array effectuated by conductive backsheet 1700A may be cross-tied (e.g., electrically connected). FIG. 5B depicts an alternative example conductive backsheet 1700B that may effectuate a PV module and PV cell array having interleaved substrings 102AA-102AF (generally, substrings 102A) with an odd number of PV cells in each substring. Conductive backsheet 1700B of FIG. 5B may be substantially similar to conductive backsheet 1700A of FIG. 5A in all respects except as explicitly disclosed herein. Referring to FIG. 5B, the PV cell array effectuated by conductive backsheet 1700B may additionally comprise substrings midpoint cross-ties 1707A and 1707B, and midpoint cross-tie connector 1754. Accordingly, the midpoints of the substrings 102A disposed on conductive backsheet 1700B may be electrically connected.

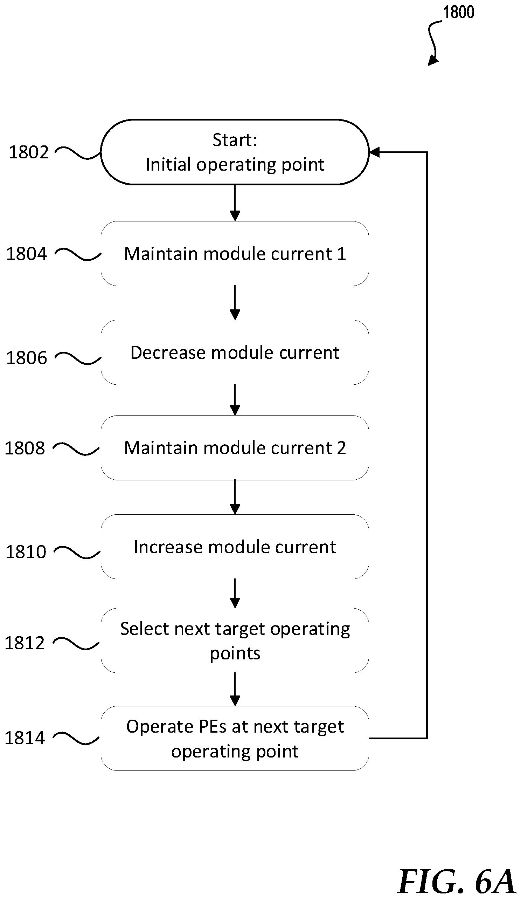

FIG. 6A depicts an example flowchart of an example method 1800 for operating a plurality of PEs (e.g., power converters) coupled to a plurality of PV substrings. The method 1800 may be carried out by a controller coupled to a plurality of PEs, each PE may be coupled to one or more substrings. For example, the method 1800 may be carried out by a controller connected to the PEs 1202 of FIGS. 3A-3M. The controller may operate the PEs in a joint-maximum-power-point mode of operation, according to method 1800. For example, such operation may comprise alternatingly increasing and decreasing duty cycles of the connected PEs (e.g., in a perturb and observe fashion), and determining a preferred duty cycle for each of the controlled PEs. For example, considering two PEs, for a first time period, increasing a duty cycle of the first PE and decreasing a duty cycle of the second power converter, for a second time period, decreasing a duty cycle of the first PE and decreasing a duty cycle of the second power converter, for a third time period, decreasing a duty cycle of the first PE and increasing a duty cycle of the second power converter, for a fourth time period, increasing a duty cycle of the first PE and increasing a duty cycle of the second power converter, obtaining, during the first, second, third and fourth time periods, voltage and current measurements of the first and second power converters, based on the measurement, selecting a preferred duty cycle for operation of the first PE and a preferred duty cycle for operation of the second power converter.

Further, for example, method 1800 may be carried out by a controller coupled to three PEs, wherein each PE may be coupled to first and second substrings. Additionally, each substring may comprise an upper half (e.g., a sub-substring coupled between a positive terminal and a midpoint terminal) and a lower half (e.g., a sub-substring coupled between a negative terminal and a midpoint terminal). For example, method 1800 may be carried out by (referring to FIGS. 3A and 3B) a controller coupled to a first PE (e.g., PE 1202A) coupled to substrings 102AA and 102FA of FIGS. 3A and 3B, a second PE (e.g., PE 1202B) coupled to substrings 102AB and 102AE, and a third PE (e.g., PE 1202C) coupled to substrings 102AC and 102AD. The midpoints of the substrings may be electrically connected via one or more conductors (e.g., substring midpoint cross-ties 236 and midpoint cross-tie connectors 354). The conductors may allow current to flow between substrings, in accordance with operating points set by the first, second and third PEs. Ultimately, the total current of the lower half-substrings (e.g., sub-substrings 106AAA, 106ABA, 106ACA, 106 ADA, 106AEA, and 106 AFA of FIGS. 3A and 3B) may be substantially the same as the total current of the upper half-substrings (e.g., sub-substrings 106AAB, 106ABB, 106ACB, 106 ADB, 106AEB, and 106 AFB of FIGS. 3A and 3B). It should be noted that each of the lower half-substrings may be substantially connected in parallel and therefore may have substantially the same voltage (e.g., via cross conduction), whereas the upper half-substrings may be connected via PE switches and, therefore, may not have the same voltage.

At step 1802, the three PEs may be operating at initial operating points, whereby each PE may be drawing power from its respective substrings. To seek a preferred and/or optimized PV module and/or PV cell array operating point (e.g., a point at which the total power output by the PV module and/or PV cell array is increased), the controller may, at step 1804, perturb one or more of the PEs (e.g., change the duty cycle), for example, control the three PEs such that some PEs (e.g., the first PE) increase their total current draw and other PEs (e.g., the second and third PEs) decrease their input current, such that the total input current to the PEs remains the same as prior to being perturbed. In this manner, the total current flowing through the lower half-substrings (which may be connected in parallel) may remain substantially the same, whereas the division of current amongst the upper half-substrings (e.g., sub-substrings) may change. In this manner the upper half-substrings may be isolated from the lower-half substrings. According to additional and or alternative configurations, it may be advantageous, to instead of perturbing all PEs, to only perturb a portion, for example, one or more PEs. Considering the cross conduction of parallelly connected PEs, perturbing one PE may also perturb the others.

If the number of PEs, N, is even (e.g., two, four, or six), a first N/2 PEs may decrease their current by X (e.g. 1A, or 100mA) with the second N/2 PEs increasing their current by X. If the number of PEs is odd, the amount of current increased or decreased by the PEs may differ from one another, but the principle of operation remains. Current, voltage and power values at the PE inputs and outputs (and/or at the PV module output) may be measured and logged and/or saved for future reference.

At step 1806, the total current input to the PEs, e.g., the total module current may be decreased. For example, one or more of the three of the PEs may reduce their input current (by, for example, being perturbed, by, for example, changing the duty cycles of the one or more PEs). As described, due to cross conduction, a change in one PE may be experienced by all PEs. Again, current, voltage and power values at the PE inputs and outputs (and/or at the PV module output) may be measured and saved for future reference. At step 1808, again the PEs may be perturbed to vary their input operating point such that the total current input to the PEs is the same as the sum under the initial operating points (e.g., by changing the duty cycle), but this time PEs that increased their current at step 1804 may decrease their current, and vice-versa. Again, the current through the lower half-substrings may remain substantially the same while the division of current among the upper-half substrings may change. Current, voltage and power values at the PE inputs and outputs (and/or at the module output) may be measured and saved for future reference.

At step 1810, the total current input to the PEs may be increased. For example, one or more of the three of the PEs may be increased their input current (by, for example, being perturbed, by, for example, changing the duty cycle). Current, voltage and power values at the PE inputs and outputs (and/or at the module output) may be measured and saved for future reference. At step 1812, the measurements obtained at steps 1804, 1806, 1808 and 1810 may be aggregated to determine if each PE draws more power at a higher current level or at a lower current level, and if the PV module produces more power at a higher module current level or a lower module current level, and the next target operating points are selected. At step 1814, the PEs are operated at the selected next target operating point and the method returns to step 1802.

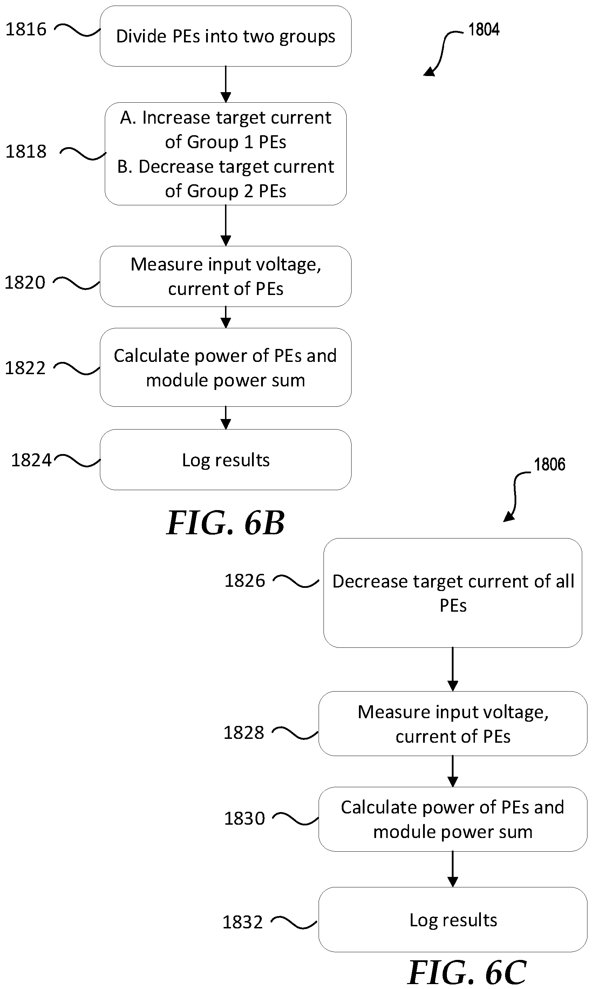

FIG. 6B shows a more detailed flow chart of method step 1804 of FIG. 6A. Referring to FIG. 6B, at step 1816, all PEs of the PV module and/or PV cell array are divided into two groups, Group 1 and Group 2. At step 1818 the target current of the Group 1 PEs may be increased (e.g., by changing the duty cycle), and the target current of the Group 2 PEs may be decreased (e.g., by changing the duty cycle). However, the overall current may be substantially the same as prior to being perturbed. At step 1820, the voltage and current at the PE inputs and/or outputs may be measured. At step 1822 the power of the PEs and PV module may be calculated. At step 1824, the results may be logged and/or stored.

FIG. 6C shows a more detailed flow chart of method step 1806 of FIG. 6A. Referring to FIG. 6C, at step 1826, the total target current to all of the PEs may be decreased, by for example, changing the current to one or more of the PEs (by, for example, changing the duty cycle of the controlled PE). At step 1828 current and voltage and PE inputs and/or outputs may be measured. At step 1830 the total power of the PEs and/or PV module may be calculated. At step 1832 the results may be logged and/or stored.

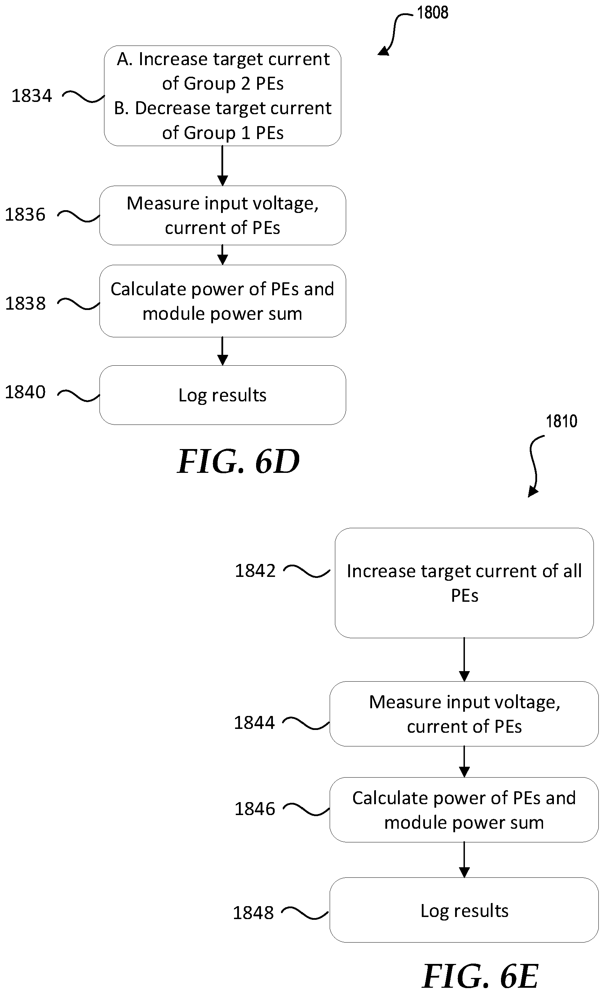

FIG. 6D shows a more detailed flow chart of method step 1808 of FIG. 6A. Referring to FIG. 6D, at step 1834, the target current of the Group 2 PEs may be increased (e.g., by changing the duty cycle), and the target current of the Group 1 PEs may be decreased (e.g., by changing the duty cycle). At step 1836, the voltage and/or current and the PE inputs and/or outputs may be measured. At step 1838, the total power at the PE inputs/and or outputs, and/or the total power of the PV module may be calculated. At step 1840, the results may be logged and/or saved.

FIG. 6E shows a more detailed flow chart of method step 1810 of FIG. 6A. Referring to FIG. 6E, at step 1842, the target current of all of the PEs may be increased (e.g., perturbed), by for example, changing the current and/or voltage of one of the PEs. At step 1844, the voltage and/or current of the PE inputs and/or outputs may be measured. At step 1846, the total power of the PE inputs and/or outputs, and/or the total power of the PV module may be calculated. At step 1848, the results may be logged and/or saved.

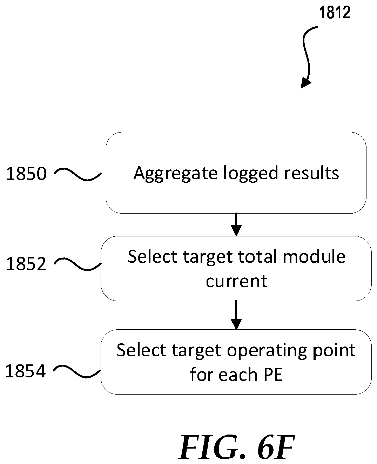

FIG. 6F shows a more detailed flow chart of method step 1812 of FIG. 6A. Referring to FIG. 6F, at step 1850, all of the logged results (e.g., of steps, 1824, 1832, 1840, and 1848) may be aggregated. At step 1852 the aggregated results may be compared and/or considered and a total target PV module current (e.g., at the inputs) (e.g., that substantially results in the maximum power) may be selected. At step 1854 the selected target operating point for each PE may be selected and/or set.

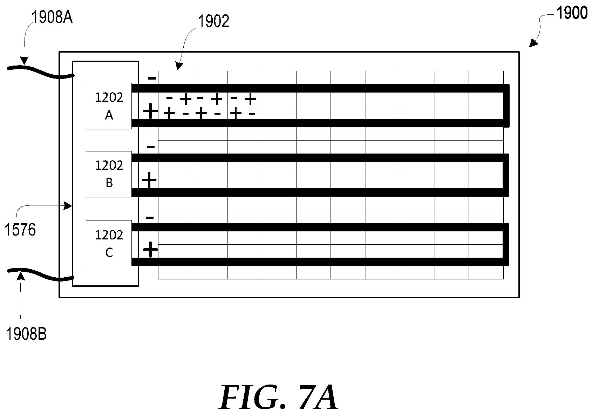

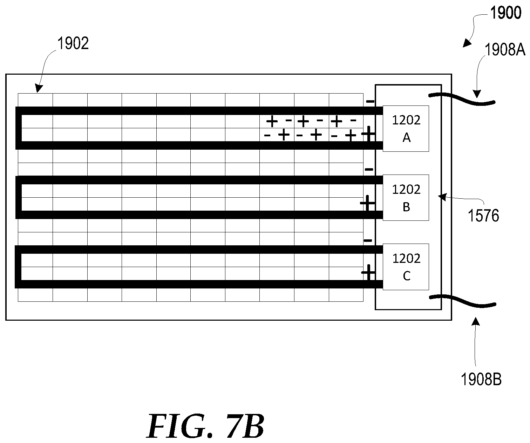

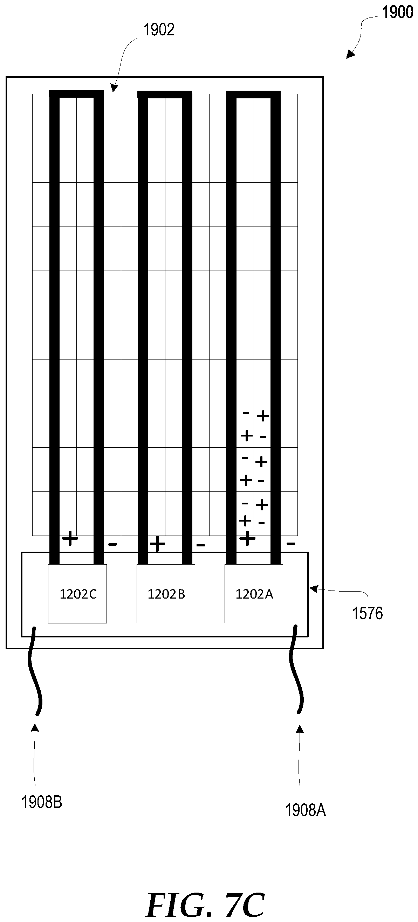

FIG. 7A shows an example single-sided PV module 1900. The PCB 1576 may be comprised of three or more sets of PEs 1202A, 1202B, and/or 1202C. The PEs 1202 may be used to increase voltage, while reducing current. In a PV system, PEs 1202 may be used to improve the power quality and increase the performance of the PV module. Cables 108A and/or 108B may be the output of the PCB 1576. In FIG. 7A the PCB 1576 is coupled to the frame of the PV module 1900. If the PCB 1576 is coupled to the frame of the PV module 1900. PCB 1576 may be located on any side that has a frame as shown by FIGS. 7A-7C. Coupling PCB 1576 to the frame (e.g., FIGS. 7A-7C, FIG. 8, FIG. 9) may be advantageous for many reasons. The electronics located on PCB 1576 may not shade the PV cells, based on their location. This may result in an increase in the energy output of the PV module 1900. Additionally, there may be minimal routing of cables, only the output cables 1908A and 1908B may need to be routed out of the frame. Coupling the PCB 1576 to the frame may allow for flexibility in the dimensions of the PCB 1576; this may apply to the X, Y, and Z dimensions. A metal frame of PV module 1900, such as aluminum, may also be used as a heat sink for PCB 1576 and PEs 1202.

FIG. 8 shows an example interleaved butterfly PV module 2000 comprising 12 substrings of PV cells 2002 with PCBs 1576A and/or 1576B coupled to the frame. PEs 1202 may be located on PCBs 1576. An interconnect 2004 may be required to connect PCB 1576A and/or PCB 1576B. Similar advantages from the FIG. 1 configuration may apply, such as using the frame as a heat sink. Additionally, the total area for electronics may be increased by having two PCBs 1576A and/or 1576B coupled to PV module 2000. This increased area for electronics may allow for finer control and monitoring of the substrings of the PV module 2000.

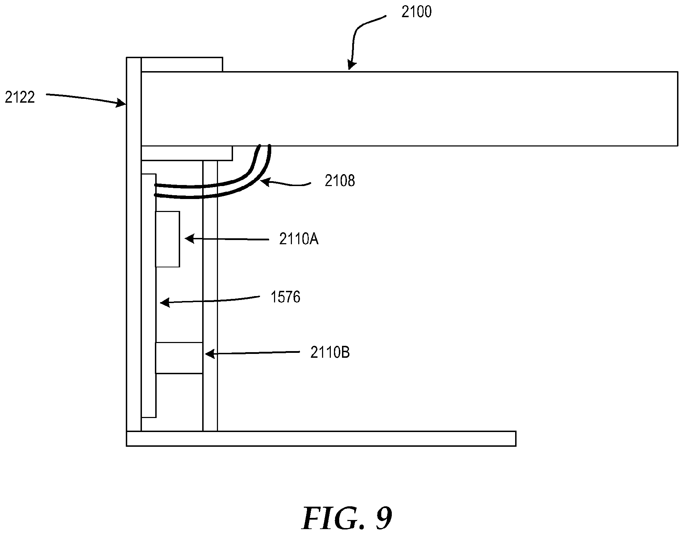

FIG. 9 shows a cross-section of a PV module with PCB 1576 coupled to a frame 2122. PV stack 2100 may be perpendicular to PCB 1576. PCB 1576 and PV stack 2100 may be connected via wires 2108. Wires 2108 may connect to the backsheet of the PV stack if the backsheet is electrified. PCB components 2110A and/or 2110B may fit within the frame based on the tallest component height, such as 2110B. The frame 2122 may be comprised of channels which may be used to route wires 2108.

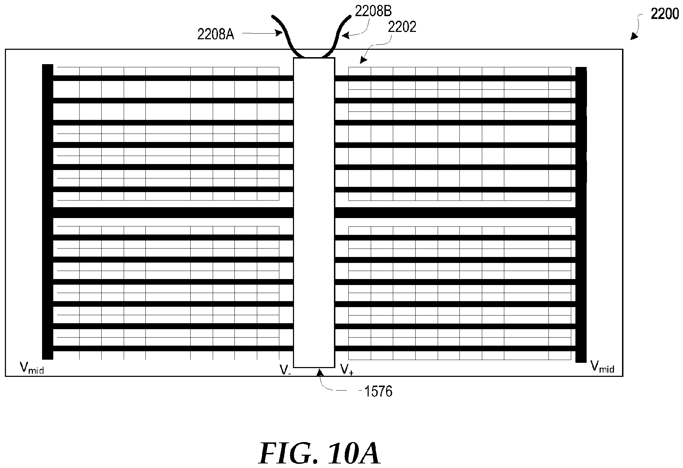

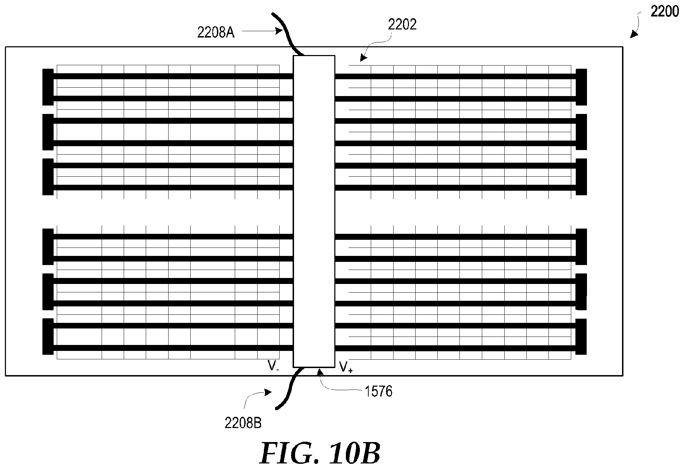

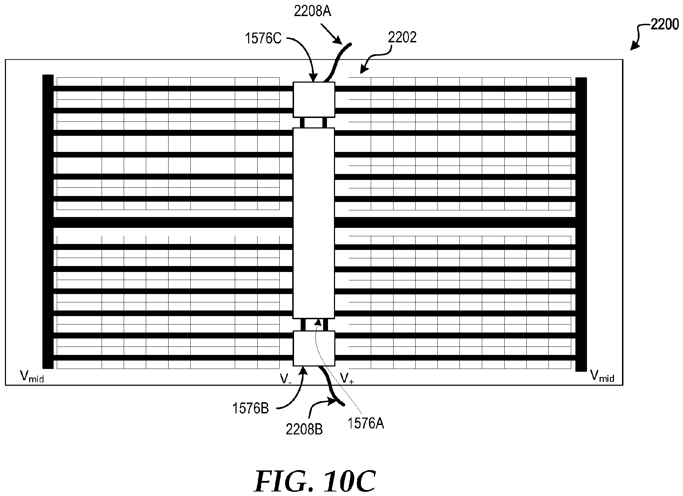

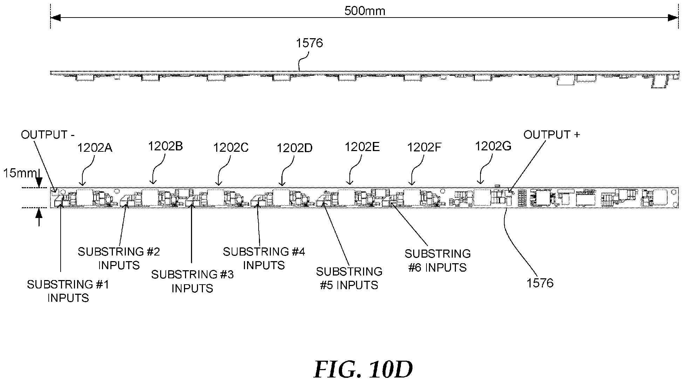

FIG. 10A shows an example interleaved butterfly PV module 2200 comprising 12 substrings of PV cells 2202 with the PCB 1576 in the laminate, and two output terminals 2208A and 2208B connected to PCB 1576. A clear potting material such as epoxy, urethane, and/or silicone may be filled from the top of the backsheet to the top of the highest component on PCB 1576. In PV module 2200, PCB 1576 may be area constrained. However, with PCB 1576 in-the-laminate, the PV module may be frameless and/or lightweight. Heat sinking may occur using the glass sheet and/or a thermal fill, such as thermally conductive epoxy or silicone, for a potting layer. FIG. 10A shows PV module 2200 which has output terminals 2208A and 2208B located at the same side of PV module 2200 and where a voltage midpoint of PV substrings is connected to PCB 1576. As shown in FIG 10B, the disclosure herein relates to PV modules in output terminals 2208A and 2208B are located at different sides of PV module 2200 and/or where PV substrings are not connected at a voltage midpoint. In FIG. 10A, PCB 1576 is shown to have a length which is on the order of the width of PV module 2200. However, having a PCB of such length may present mechanical and thermal challenges. For example, ambient heat, heat generated by switches in power electronics 1202, or heat generated by the PV cells in PV module 2200 may cause PCB 1576 to expand in length and/or width. The longer and wider PCB 1576 is, the larger the effect of heat on the dimensions of PCB 1576 may be. Such an expansion may cause mechanical stress on PCB 1576, which may affect the operation of the circuitry (e.g., cracks in conductors and/or in the soldering). FIG. 10C shows that PV module 2200 may include a main PCB 1576A which may include power electronics 1202 and additional PCBs (e.g., junction boxes) such as PCBs 1576B and 1576C. PCBs 1576B and 1576C may route power from some of the substrings in PV module 2200 to main PCB 1576 and power electronics 1202 by using conductors. The conductors may be flexible (e.g., jumper cables) or rigid (e.g., traces on a PCB). The length of main PCB 1576A may be smaller than the width of PV module 2200, thus reducing the effects of heat on PCB 1576A. FIG. 10D shows an example of a layout of PCB 1576 which includes power electronics 1202 (e.g., power electronics 1202 of FIG. 2). Power electronics 1202 may receive power from six substrings. As depicted in FIG. 10C, the width of PCB 1576 may be on the order of the width of PV panel 2200, and the length of PCB 1576 may be by an order of magnitude larger than the width of PCB 1576. For example, PCB 1576 may have a width of 200, 300, 500, 600, or 800 millimeters and a length of 15mm, or even 10mm or 8mm. In the example shown in FIG. 10D power electronics 1202A-1202F may correspond to boost converters 1203A-1203F (FIG. 3M), and power electronics 1202G may correspond to buck converter 1204 (FIG. 3M). PCB s 1576A, 1576B and 1576C may be variously disposed. For example, PCBs 1576A-1576C may all be disposed in a laminate of PV module 2200. As another example, PCB 1576A may be disposed in a laminate of PV module 2200, and PCBs 1576B and 1576C may be disposed in externally-fastened junction boxes. The example shown in FIGS 10A-10D may be applied to any of the PV modules according to disclosure herein.

The control circuit configured to operate power electronics 1202 (e.g., control device 1270) may be configured to provide pulse width modulation (PWM) signals to the power electronics 1202 according to modulation schemes designed to reduce electromagnetic interference (EMI). These PWM signals may be provided at different frequencies to reduce electromagnetic interference (EMI). Additionally or alternatively, the control device 1270 may phase-shift the PWM signals to further reduce EMI. The control device 1270 may operate each maximum power point tracking DC-DC converter (e.g. boost converters 1203A-F of Fig. 3M) to perform maximum power point tracking (MPPT) for each PV substring by adjusting the duty cycle of PWM signal provided to the corresponding converter, but apply a different frequency and/or phase-shifted PWM signal.

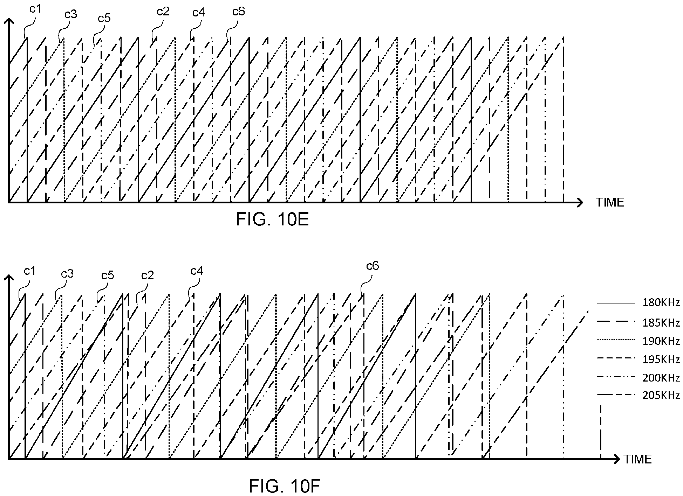

Reference is now made to Fig. 10E, which shows a plurality of phase-shifted carrier signals, in this example, six: c1 through c6. Each phase-shifted carrier signal is, in this example, a sawtooth wave. In other examples, the carrier signal may be a triangular wave. Each carrier signal may be compared to a reference value to determine a desired target duty cycle to be applied to a particular MPPT DC/DC converter. The six carrier signals are phase shifted by 360/6 = 60 degrees with respect to one another. The phase shifting is enabled by having a single controller or multiple synchronized controllers disposed on a single PCB and controlling multiple converters disposed on a single PCB. Phase-shifting may reduce EMI and enhance ability to comply with local requirements and regulations, particularly when applied to multiple photovoltaic substrings on a single photovoltaic panel, which (e.g., due to similar shading conditions) may result in similar duty cycles used to extract maximum power from the PV substrings. In other examples, a subset of the carrier signals may be phase-shifted. For example, if N DC/DC converters are operated by a single controller to maximum power point track N photovoltaic substrings, N/2 carrier signals may be in-phase and the other N/2 carrier waves may be phase-shifted by 180 degrees compared to the first N/2 carrier signals.

Reference is now made to Fig. 10F, which shows a plurality of frequency-shifted carrier signals, in this example, six: c1 through c6. Each frequency-shifted carrier signal is, in this example, a sawtooth wave. Each carrier signal may be compared to a reference value to determine a desired target duty cycle to be applied to a particular power electronics circuit (e.g. a MPPT DC/DC converter. In this example, six carrier signals are shown, e.g. for applying to six MPPT DC/DC converters. Each carrier signal, in this example, has a unique frequency, ranging from 180kHz to 205kHz, each pair differing by 5kHz. In other examples, pairs of different carrier signals may differ by more than 5kHz. For example, if ten DC/DC converters are operated at different frequencies, a controller may provide 10 carrier signals at 400kHz, 410kHz, 420kHz... 490kHz. In some cases, the carrier signals may differ by tens or even hundreds of kHz. Frequency-shifting may reduce EMI and enhance ability to comply with local requirements and regulations, particularly when applied to multiple photovoltaic substrings on a single photovoltaic panel, which (e.g., due to similar shading conditions)may result in similar duty cycles used to extract maximum power from the PV substrings. In other examples, a subset of the carrier signals may be phase-shifted. For example, if N DC/DC converters are operated by a single controller to maximum power point track N photovoltaic substrings, N/2 carrier signals may feature a common frequency (e.g., 200kHz) and the other N/2 carrier signals may feature a different common frequency (e.g., 250kHz).

According to some implementations, PWM signals may be generated without hardware implementation of phase-shifted or frequency-shifted carrier signals, rather, software may be used to emulate such carrier signals or to generate PWM signals emulating signals generated using such carrier signals. Reference to 'phase-shifted' or 'frequency-shifted' PWM signals may include PWM signals that approximate signals created using such carrier signals.

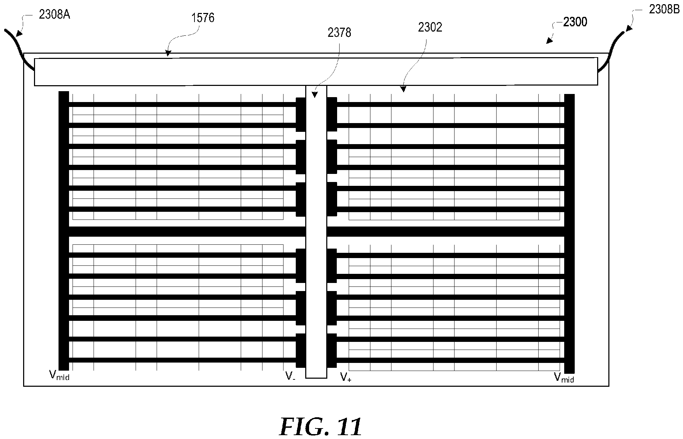

FIG. 11 shows an example interleaved butterfly PV module 2300 comprising 12 substrings of PV cells 2302 with rigid PCB 1576 and flex PCB 2378. In this embodiment, PCB 1576 may be coupled to the frame and may comprise the MLPE, PCB 2378 may be coupled to the laminate and comprise routing traces from the substrings to PCB 1576. Heat sinking may occur between the frame and PCB 1576. PCB 2378 may not need heat sinking because it may be used for routing.

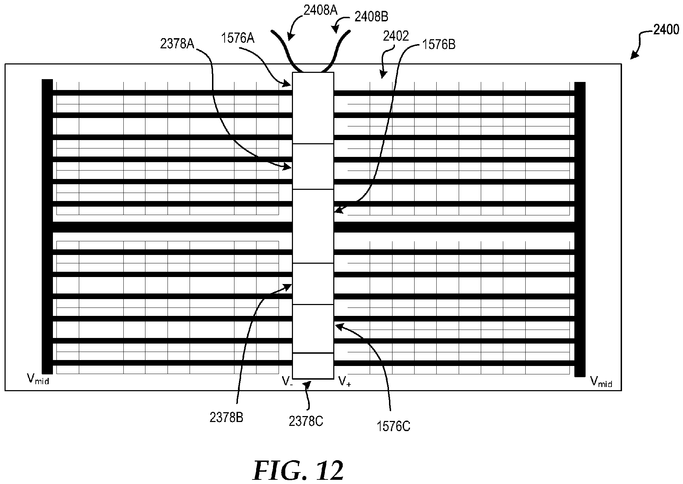

FIG. 12 shows an example interleaved butterfly PV module 2400 comprising 12 substrings of PV cells 2402 with rigid PCB sections 1576A, 1576B, and 1576C and flex PCB sections 2378A, 2378B, and 2378C. All sections of rigid and flex PCBs may be referred to as rigid-flex PCB 1576. The top layer of the PV module 2400 may be a glass sheet. There may be cutouts in the glass sheet which may create pockets for tall components on PCB 1576. Potting may be used instead of a junction box to protect components. There may be a junction box for the cables 2408A and 2408B. Heat management may happen between the glass and the environment. This embodiment may allow for a frameless, light-weight design.

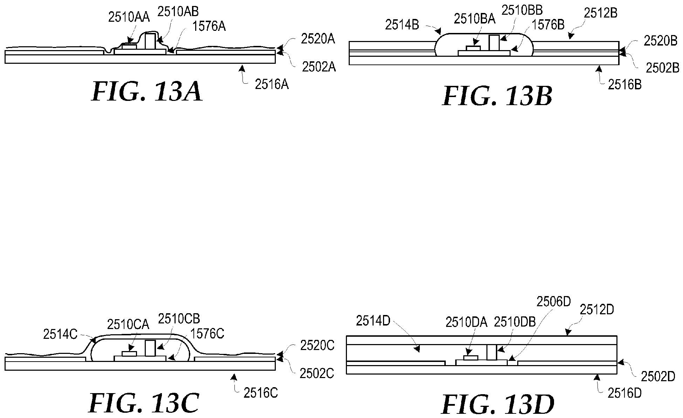

FIGS. 13A-13D show different cross-sections of a PV module with the PCB 1576 in the laminate. All of these configurations may support a frameless, lightweight design. Additionally, having electronics within the laminate may allow PCB 1576 to be easily visible while the PV module is installed. This may allow for test points, diagnostic LEDs and/or screens, etc. to be installed as part of the electronics on the PCB 1576. In some embodiments, the PCB 1576 may be collocated on the on the substrate used to create PV cells 2502.

In FIG. 13A a PCB 1576 may be coupled to a backsheet 2516A. PV cells 2502A may also be coupled to backsheet 2516A. A conforming laminate 2520A may be applied to the PV cells 2502A and PCB 1576A. The laminate may conform to components 2510AA and 2510AB. The conforming laminate 720A may be used instead of a glass sheet as the top layer of the PV module. This may be advantageous because cutouts will not be required for tall components such as 2510AB.

In FIG. 13B a PCB 1576B may be coupled to a backsheet 2516B. PV cells 2502B may also be coupled to backsheet 2516B. A laminated 2520B may be coupled to PV cells 2502B. A glass sheet 2512B may be coupled to laminate 2520B. layers 2502B, 2520B, and/or 2512B may have cutouts to accommodate PCB 1576B. Additionally, PCB 1576B may be potted using potting material 1514B.

In FIG. 13C a PCB 1576C mya be coupled to a backsheet 2516C. PV cells 2502C may also be coupled to backsheet 2516C. PCB 1576C may be potted using potting material 2514C. A conforming laminate layer 2520C may be used instead of a glass sheet as the top layer of the PV module. The conforming laminate layer 2520C may be applied as a top layer to PV cells 2502C and potting 2514C. This may be advantageous because cutouts will not be required for tall components such as 2510AC.

In FIG. 13D a PCB 1576D and PV cells 2502D may be coupled to backsheet 2516D. A conformal coating layer 2514D may be applied to the PV cells 2502D and PCB 1576D. A glass sheet 2512D may be coupled to the conformal coating layer 2514D.

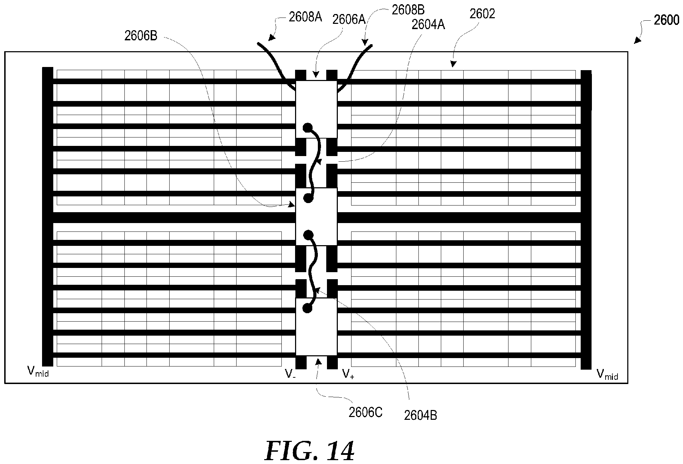

FIG. 14 shows an interleaved butterfly PV module 2600 comprising 12 substrings of PV cells 2602 with decentralized junction boxes 2606A, 2606B, and 2606C. These junction boxes may house PCBs 1576 with MLPE. Heat management may occur between the junction box and a heatsink. Wires 2604A and 2604B may be used to connect junction boxes 2606A, 2606B, and 2606C together. This embodiment may allow for a frameless light-weight design. Additionally, the junction box solution may allow for proven field replacement technologies. Since the electronics are decentralized a PV module may be able to partially operate even if one of the junction boxes 2606 were to stop operating.

FIGS. 15A-15E show different ways to heatsink PCB 1576. In FIG. 15A there may be a cutout in back sheet 2716A to accommodate PCB 1576A. Heatsink 2724A may be coupled to the bottom of PCB 1576A. The remaining PV stack may resemble FIG. 13D described herein. In FIG. 15B there may be a heatsink 2724B coupled to frame 2722B in the region where PCB 1576B is coupled to frame 2722B. The remainder of the PV stack may resemble a backsheet layer 2716B, coupled to a PV cell layer 2702B, coupled to a laminate layer 2720B, coupled to a glass sheet layer 2712B. In FIG. 15C the PV stack may resemble FIG. 13B with a heatsink 2724C coupled to the top of potting material 2714C. In FIG. 15D the PV stack may resemble FIG. 13B with through holes 2726D in the backsheet 2716D. The heatsink 2724D may be coupled to the backsheet 2716D. The through holes 2726D may conduct heat from the PCB 1576D to the heat sink 2724D. In FIG. 15E the PV stack may remain unaltered with a backsheet layer 2716E, a PV cell layer 2702E, a laminate layer 2720E, and/or a glass sheet layer 2712E. The PCB 1576E may be contained in junction box 2728E. Junction box 2728E may be filled with potting material 2714E. Heatsink 2724E may be coupled to the top of junction box 2728E.

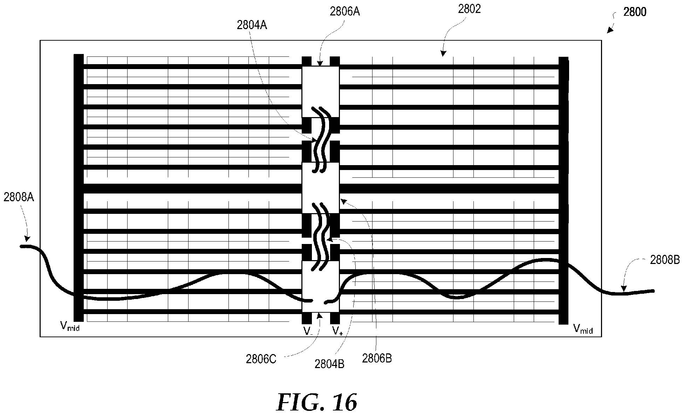

FIG. 16 shows an interleaved butterfly PV module 2800 comprising 12 substrings of PV cells 2802 with decentralized junction boxes 2806A, 2806B, and 2806C, using heavy copper cables and/or bus bars 2804A and 2804B as a heat sink. PEs 1202 may be located within junction boxes 2806. The junction box solution may allow for proven field replacement technologies. Since the PEs 1202 are decentralized a PV module may be able to partially operate even if one of the junction boxes 2806 were to stop operating.

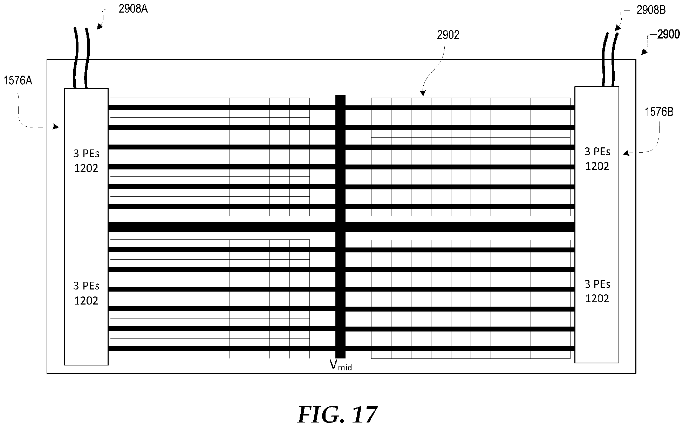

FIG. 17 shows a PV module with two PCBs 1576 with V_{mid} in the middle of the PV module. PEs 1202 may be located on PCBs 1576A and 1576B. PCBs 1576A and 1576B may be connected via wires, ribbon cable, or other conductive material. Additionally, a wire may be imprinted into the frame or the frame may be connected to ground to reduce overall cabling. PCBs 1576A and 1576B may be coupled to the frame of PV module 2900.

In some embodiments, PCBs 1576A and 1576B may each have a positive and negative output 2908A and 2908B. This may act to decouple the two sides of the PV module since the output strings can be routed separately. This may be advantageous in applications such as roof tiles, where it may be difficult to connect output strings when they are all facing the same way. Additionally, PCB 1576 may be swapped out with a different set of PEs 1202 based on the needs of the installation. This may allow not only for customization based on the installation, but also may allow for repairs and upgrades after the PV module has been installed.

Several alternative examples have been described and depicted herein. A person of ordinary skill in the art would appreciate the features of the individual aspects, and the possible combinations and variations of the components. A person of ordinary skill in the art would further appreciate that any of the example configurations maybe provided in any combination with the other example configurations disclosed herein. The present examples and aspect, therefore, are to be considered in all aspects as examples and not restrictive, and the invention is not to be limited to the details given herein. Terms such as "top," "bottom," "left, "right," "front," back," "outward," "inward," "leftmost," "rightmost," "upward," "downward," and the like, as used herein, are relative terms intended for purposes of example only and do not limit the scope of the disclosure. Additionally, terms such as "rows" should not be limited to the horizontal orientation only but may be understood to include the vertical orientation (for example, where example orientations and/or configurations are rotated). Similarly, terms such as "columns" should not be limited to the vertical orientation only but may be understood to include the horizontal orientation (for example, where orientations and/or configurations are rotated). Nothing in this specification should be construed as requiring specific three-dimensional orientation of structures in order to fall within the scope of the disclosure, unless explicitly specified by the claims. Additionally, the term "plurality" as used herein, indicates any number greater than one, either disjunctively or conjunctively, as necessary, up to an infinite number. Accordingly, while the specific examples have been depicted and described, numerous modifications come to mind without significantly departing from the spirit of the disclosure and the scope of protection is only limited by the scope of the accompanying claims.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Hereinafter, various characteristics will be highlighted in a set of numbered clauses or paragraphs. These characteristics are not to be interpreted as being limiting, but are provided merely as a highlighting of some characteristics as described herein, without suggesting a particular order of importance or relevancy of such characteristics.
Clause 1: An apparatus comprising:
   an electronics system; and
   a number of strings of photovoltaic cells; wherein
   the electronics system is coupled to a frame of a photovoltaic (PV) module; and
   the frame of the PV module is used for thermal management of the electronic system.
Clause 2: The apparatus of clause 1, wherein the electronics system is comprised of buck, boost, and buck/boost converters.
Clause 3: The apparatus of any of clauses 1-2, wherein the electronics system comprises one or more printed circuit boards (PCBs).
Clause 4: The apparatus of any of clauses 1-3, wherein the frame of the PV module is comprised of channels which may be used for wires.
Clause 5: An apparatus comprising:
   an electronics system; and
   a number of strings of photovoltaic cells; wherein
   the electronics system is in a laminate of a photovoltaic (PV) module.
Clause 6: The apparatus of clause 5, wherein the electronics system is comprised of buck, boost, and buck/boost converters.
Clause 7: The apparatus of any of clauses 5-6, wherein the electronics system comprises one or more printed circuit boards (PCBs) and those PCBs are comprised of rigid and/or flex PCBs.
Clause 8: The apparatus of any of clauses 5-7, wherein the PCB and the photovoltaic cells are located on the same substrate.
Clause 9: The apparatus of any of clauses 5-8, wherein the laminate comprises a conforming laminate.
Clause 10: The apparatus of any of clauses 5-9, comprising glass sheets with cutouts.
Clause 11: The apparatus of any of clauses 5-10, comprising a layer of potting material adjacent to the photovoltaic cells.
Clause 12: The apparatus of any of clauses 5-11, wherein the electronics system is encased in a potting material.
Clause 13: The apparatus of clause 12, wherein potting material is comprised of thermally conductive material.
Clause 14: An apparatus comprising:
   an electronics system; and
   a number of strings of photovoltaic cells; wherein
   the electronics system is coupled to a junction box of a photovoltaic (PV) module; and
   there are multiple junction boxes per photovoltaic module.
Clause 15: The apparatus of clause 14, wherein the electronics system is comprised of buck, boost, and buck/boost converters.
Clause 16: The apparatus of any of clauses 14-15, wherein the electronics system comprises one or more printed circuit boards (PCBs).
Clause 17: The apparatus of any of clauses 14-16, wherein the PCBs are comprised of rigid/flex PCBs.
Clause 18: The apparatus of any of clauses 14-17, wherein the electronics system is encased in a potting material.
Clause 19: The apparatus of any of clauses 14-18, wherein the junction box is coupled to the glass of the PV module.
Clause 20: The apparatus of any of clauses 14-19, wherein the junction box is coupled to the frame of the PV module.
Clause 21: An apparatus comprising:
   a plurality of photovoltaic (PV) substrings, each PV substring comprising one or more PV cells;
   a plurality of first direct current to direct current (DC-DC) converters, each having an input and an output, wherein the input of each of the plurality of first DC-DC converters is coupled to a corresponding PV substring;
   a second DC-DC converter, wherein the output of each of the plurality of first DC-DC converter is coupled to an input of the second DC-DC converter; and
   a control circuit configured to and configured to maximum-power-point-track each PV substring.
Clause 22: The apparatus of clause 21, wherein the control circuit comprises a microcontroller configured to provide control signals to each of the plurality of DC-DC converters.
Clause 23: The apparatus of clause 21, wherein the control circuit comprises a plurality of microcontrollers, each configured to provide control signals to a converter of the plurality of DC-DC converters.
Clause 24: The apparatus of any of clauses 21-23, wherein the plurality of first DC-DC converters comprise boost converters.
Clause 25: The apparatus of any of clauses 21-23, wherein each of the plurality of first DC-DC converters comprises a boost portion and a buck portion.
Clause 26: The apparatus of any one of clauses 21-25, wherein the second converter is a buck converter.
Clause 27: The apparatus of any one of clauses 24-26, wherein the control circuit is configured to control the second DC-DC converter to down convert a voltage at the input of the second DC-DC converter to a safety voltage at the output of the second DC-DC converter.
Clause 28: The apparatus of any one of clauses 24-26, wherein the control circuit is configured to:
   control the second DC-DC converter to increase a voltage at the output of the second DC-DC converter to a threshold voltage;
   control the second DC-DC converter to transition to a bypass mode based on the output voltage being at or above the threshold voltage; and
   control each of the plurality of first DC-DC converters to increase the voltage at the corresponding output.
Clause 29: The apparatus of any one of clauses 21-27, wherein PV substrings are integrated in a PV module, and
   wherein the plurality of first DC-DC converters and the second DC-Dc converter are integrated on a PCB having a width of the PV module.
Clause 30: The apparatus of any one of clauses 21-28, wherein the length of the PCB is at least an order of magnitude smaller than the width of the PCB.
Clause 31: A method comprising:
   convert, by a first direct current to direct current (DC-DC) converter, a voltage from substrings in a PV module, to a safety voltage level at output terminals of the first DC-DC converter;
   increasing, by the first DC-DC converter the voltage from the substrings;
   based on the voltage level at the output terminals reaching a threshold voltage:
      transition the first DC-DC converter to a bypass mode; and
      increase by each of a plurality of second DC-DC converters to the voltage from a corresponding substring.
Clause 32: An apparatus comprising:
   a photovoltaic module comprising:
   a plurality of photovoltaic (PV) substrings, each PV substring comprising one or more PV cells,
   a plurality of direct current to direct current (DC-DC) converters, each having an input coupled to a respective PV substring,
   a control circuit configured to and configured to maximum-power-point-track the respective PV substring,
   wherein outputs of the plurality of DC-DC converters are coupled in series to form a combined module DC voltage,
   a direct current to alternating current (DC-AC) stage circuit,
   AC module outputs.
Clause 33: The apparatus of clause 30, wherein the control circuit comprises a microcontroller configured to provide control signals to each of the plurality of DC-DC converters.
Clause 34: The apparatus of clause 30 wherein the control circuit comprises a plurality of microcontrollers, each configured to provide control signals to a converter of the plurality of DC-DC converters.
Clause 35: The apparatus of any of clauses 30-32, wherein the plurality of DC-DC converters comprise boost converters.
Clause 36: The apparatus of any of clauses 30-32, wherein each of the plurality of DC-DC converters comprises a boost portion and a buck portion.
Clause 37: The apparatus of any of clauses 30-34, wherein the DC-AC stage circuit comprises one or more switches.
Clause 38: The apparatus of any of clauses 30-34, wherein the DC-AC stage circuit comprises one or more relays.
Clause 39: The apparatus of any of clauses 30-36, wherein the DC-AC stage circuit comprises a full-bridge circuit.
Clause 40: The apparatus of any of clauses 30-38, wherein the DC-AC stage circuit comprises two half-bridge circuits.
Clause 41: The apparatus of clause 38, wherein a first half-bridge circuit comprises a first buck conversion stage coupled to a first plurality of boost converters, and wherein a second half-bridge circuit comprises a second buck conversion stage coupled to a second plurality of boost converters.
Clause 42: The apparatus of any of clauses 30-36, wherein the plurality of DC-DC converters are configured to form a biased sine wave signal.
Clause 43: The apparatus of any of clauses 30-36, wherein the plurality of DC-DC converters are configured to form a rectified sine wave signal, and wherein the DC-AC stage circuit comprises a full bridge circuit configured to switch at a grid frequency.
Clause 44: The apparatus of any of clauses 30-36, wherein the plurality of DC-DC converters are configured to form a substantially fixed DC voltage at an input connection to the DC-AC stage, and the DC-AC stage comprises a 3-level inverter.
Clause 45: The apparatus of clause 42, wherein the DC-AC stage comprises a neutral point clamped (NPC) inverter.
Clause 46: The apparatus of clause 42, wherein the DC-AC stage comprises a T-type neutral point clamped (TNPC) inverter.
Clause 47: The apparatus of any of clauses 42-44, wherein a neutral point is formed by a cascade connection of a plurality of capacitors between a negative input terminal to the DC-AC stage and a positive input terminal to the DC-AC stage.
Clause 48: The apparatus of clause 45, wherein the neutral point is connected to a casing of the photovoltaic module.
Clause 49: The apparatus of any of clauses 30-46, wherein the control circuit is configured to cause a low-voltage photovoltaic module maximum voltage during a non-production mode of operation.
Clause 50: The apparatus of clause 47, wherein the control circuit is configured to operate the photovoltaic module to switch out one or more photovoltaic substrings during a non-production mode of operation.
Clause 51: The apparatus of any of clauses 47-48, wherein the control circuit is configured to switch-in a low-output-voltage power supply during a non-production mode of operation.
Clause 52: The apparatus of any of clauses 47-49, wherein the control circuit is configured to operate the buck stage of one of the DC-DC converters to provide a low-output-voltage power supply during a non-production mode of operation.
Clause 53: A method comprising:
   identify fog, ice, and/or snow conditions in a substring of a plurality of substring in a PV module; and
   provide, by a converter corresponding to the identified substring, a reverse current to the corresponding substring.
Clause 54: The apparatus of any one of clauses 21-30, wherein the output of the second is comprises an isolating transformer, wherein the isolating transformer as a ratio between a number of primary side windings and a number of secondary side windings,
   wherein the ratio determines a transformer voltage conversion ratio.
Clause 55: The apparatus of clause 54, wherein a creepage and clearance of the photovoltaic module are determined for no more than tens of volts.
Clause 56: The apparatus of clause 55, wherein a creepage and clearance of the photovoltaic module are determined for no more than 20 volts.
Clause 57: The apparatus of clauses 22 or 23, wherein the control circuit comprises a microcontroller configured to provide phase-shifted control signals to each of the plurality of DC-DC converters.
Clause 58: The apparatus of clauses 22 or 23, wherein the control circuit comprises a microcontroller configured to provide frequency-shifted control signals to each of the plurality of DC-DC converters.
Clause 59: The apparatus of clauses 22 or 23, wherein the control circuit comprises a plurality of microcontrollers, each configured to provide control signals to a converter of the plurality of DC-DC converters, wherein at least two of the microcontrollers provide control signals which are phase-shifted with respect to one another.
Clause 60: The apparatus of clauses 22 or 23, wherein the control circuit comprises a plurality of microcontrollers, each configured to provide control signals to a converter of the plurality of DC-DC converters, wherein at least two of the microcontrollers provide control signals which are frequency-shifted with respect to one another.
Clause 61: An apparatus comprising:
   a plurality of photovoltaic (PV) substrings, each PV substring comprising one or more PV cells;
   a printed circuit board comprising: a plurality of first-stage direct current to direct current (DC-DC) converters, each having an input and an output, wherein the input of each of the plurality of first DC-DC converters is coupled to a corresponding PV substring;
   a second-stage DC-DC converter, wherein the output of each of the plurality of first DC-DC converters is coupled to an input of the second DC-DC converter; and a control circuit configured control each of the first-stage DC-DC converters and to maximum-power-point-track each PV substring.
Clause 62: The apparatus of clause 61, wherein the control circuit is configured to control each of the plurality of first-stage DC-DC converters by providing a respective plurality of pulse width modulation (PWM) signals such that each of the plurality of first-stage DC-DC converters receives a PWM signal, and at least two of the plurality of PWM signals are at different frequencies.
Clause 63: The apparatus of clause 62, wherein each of the plurality of PWM signals is at a unique frequency.
Clause 64: The apparatus of any of clauses 61 and 63, wherein at least two of the plurality of PWM signals are phase-shifted with respect to one another.
Clause 65: The apparatus of clause 64, wherein all of the PWM signals are phase shifted with respect to one another.
Clause 66: The apparatus of clause 65, wherein the plurality of first-stage direct current to direct current (DC-DC) converters comprises N DC-DC converters, the controller is configured to provide N PWM signals, and each PWM signal is phase-shifted by substantially 360/N with respect to another PWM signal.
Clause 67: The apparatus of clause 66, wherein N=6, and six PWM signals are provided by the control circuit to respective six DC-DC converters, wherein the six PWM signals have a phase shift of substantially zero, 60 degrees, 120 degrees, 180 degrees, 240 degrees, and 300 degrees.
Clause 68: The apparatus of any of clauses 62-67, wherein the control circuit is configured to provide a plurality of PWM signals, each PWM signal of the plurality of PWM signals having a frequency differing from a frequency each other PWM signal frequency by at least 5kHz.
Clause 69: The apparatus of clauses 22 or 23, wherein the control signal is a PWM signal, wherein the controller generates the PWM signal using a carrier signal and a reference signal.
Clause 70: The apparatus of clause 69, wherein the carrier signal is one of a sawtooth wave or a triangular wave.
Clause 71: The apparatus of any one of clauses 69-70, wherein the controller emulates the carrier signal or to generate PWM signals.

## Claims

1. An apparatus comprising:
a plurality of photovoltaic (PV) substrings, each PV substring comprising one or more PV cells;
a plurality of first direct current to direct current (DC-DC) converters, each having an input and an output, wherein the input of each of the plurality of first DC-DC converters is coupled to a corresponding PV substring;
a second DC-DC converter, wherein the output of each of the plurality of first DC-DC converters is coupled to an input of the second DC-DC converter; and
a control circuit configured to and configured to maximum-power-point-track each PV substring.

2. The apparatus of claim 1, wherein the control circuit is configured to:
provide control signals to each of the plurality of first DC-DC converters; and
provide a control signal to the second DC-DC converter.

3. The apparatus of any one of claims 1-2, wherein the plurality of first DC-DC converters comprise boost converters.

4. The apparatus of any one of claims 1-3, wherein the second converter is a buck converter.

5. The apparatus of any one of claims 1-4, wherein in a non-production mode of operation, the control circuit is configured to control the second DC-DC converter to down convert a voltage at the input of the second DC-DC converter to a safe voltage at the output of the second DC-DC converter.

6. The apparatus of any one of claims 1-5, wherein the control circuit is configured to:
control the second DC-DC converter to increase a voltage at the output of the second DC-DC converter to a threshold voltage;
control the second DC-DC converter to transition to a bypass mode based on the output voltage being at or above the threshold voltage; and
control each of the plurality of first DC-DC converters to increase the voltage at the corresponding output.

7. The apparatus of any one of claims 1-6, wherein the PV substrings are integrated in a PV module.

8. The apparatus of claim 7, wherein the plurality of first DC-DC converters and the second DC-DC converter are integrated in the PV module on a PCB having a width of the PV module.

9. The apparatus of claim 8, wherein a length of the PCB is at least an order of magnitude smaller than the width of the PCB.

10. The apparatus of any one of claims 8-9, wherein the PCB and the PV cells are located on the same substrate.

11. The apparatus of any one of claims 7-10 wherein the plurality of PV substrings, the plurality of first DC-DC converters and the second DC-DC converter are in a laminate of the photovoltaic (PV) module.

12. The apparatus of any one of claims 7-11, wherein the PV module comprises glass sheets with cutouts.

13. The apparatus of any one of claims 7-12, wherein the plurality of first DC-DC converters and the second DC-DC converter are coupled to a junction box of a photovoltaic (PV) module.

14. A method comprising:
convert, by a first direct current to direct current (DC-DC) converter, a voltage from substrings in a PV module, to a safety voltage level at output terminals of a first DC-DC converter;
increasing, by the first DC-DC converter the voltage from the substrings;
based on the voltage level at the output terminals reaching a threshold voltage:
transition the first DC-DC converter to a bypass mode; and
increase, by each of a plurality of second DC-DC converters, the voltage from a corresponding substring.

15. The method of claim 14, further comprising controlling, using the second DC-DC converters, a corresponding substring at a maximum power point of the corresponding substring.
